(19) Europäisches Patentamt
European Patent Office
Office européen des brevets

(11) **EP 2 572 289 B1**

(12) **EUROPEAN PATENT SPECIFICATION**

(45) Date of publication and mention of the grant of the patent:
**09.10.2019 Bulletin 2019/41**

(21) Application number: **11784072.8**

(22) Date of filing: **17.05.2011**

(51) Int Cl.:
***G06F 16/25*** (2019.01)

(86) International application number:
**PCT/US2011/036771**

(87) International publication number:
**WO 2011/146452 (24.11.2011 Gazette 2011/47)**

(54) **DATA STORAGE AND PROCESSING SERVICE**

DATENSPEICHER- UND -VERARBEITUNGSDIENST

SERVICE DE TRAITEMENT ET DE MISE EN MÉMOIRE DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2011 US 201113108604**
**18.05.2010 US 346011 P**

(43) Date of publication of application:
**27.03.2013 Bulletin 2013/13**

(73) Proprietors:
- **Google LLC**
**Mountain View, CA 94043 (US)**
- **Agarwal, Amit**
**Fremont, California 94536 (US)**
- **Sheldon, Michael**
**Seattle, Washington 98102-3363 (US)**
- **Kadatch, Andrew**
**Redmond, Washington 98052 (US)**

(72) Inventors:
- **AGARWAL, Amit**
**Fremont, California 94536 (US)**
- **SHELDON, Michael**
**Seattle, Washington 98102-3363 (US)**
- **KADATCH, Andrew**
**Redmond, Washington 98052 (US)**

(74) Representative: **Betten & Resch**
**Patent- und Rechtsanwälte PartGmbB**
**Maximiliansplatz 14**
**80333 München (DE)**

(56) References cited:
**US-A1- 2003 028 509      US-A1- 2006 253 419**
**US-A1- 2007 088 723      US-A1- 2007 124 317**
**US-A1- 2007 156 842      US-A1- 2008 281 784**
**US-B1- 6 751 618**

- **DANIEL J ABADI ET AL: "SW-Store: a vertically partitioned DBMS for Semantic Web data management", THE VLDB JOURNAL ; THE INTERNATIONAL JOURNAL ON VERY LARGE DATA BASES, SPRINGER, BERLIN, DE, vol. 18, no. 2, 4 February 2009 (2009-02-04), pages 385-406, XP019723888, ISSN: 0949-877X**

**Description**

**TECHNICAL FIELD**

This document generally describes techniques, methods, systems, and mechanisms for providing a data storage and processing service.

**BACKGROUND**

The present disclosure generally relates to large-scale analytical data processing. Such data processing has become widespread in web companies and across industries, not least due to low-cost storage that enabled collecting vast amounts of business-critical data. Putting this data at the fingertips of analysts and engineers has grown increasingly important; interactive response times often make a qualitative difference in data exploration, monitoring, online customer support, rapid prototyping, debugging of data pipelines, and other tasks. Performing interactive data analysis at scale demands a high degree of parallelism. For example, reading one terabyte of compressed data in one second using today's commodity disks may require tens of thousands of disks. Similarly, CPU-intensive queries may need to run on thousands of cores to complete within seconds.

US 2007/124317 A1 relates to data processing and more specifically to managing datastores and, particularly, to augmenting results of a query to an operational datastore with relevant data that may be stored in a staging area datastore. In US 2007/124317 A1, upon receiving a query to the operational datastore, it is determined whether data relevant to the query is present in the staging area datastore. If relevant data is present, such data may be transformed, transferred and combined with data in the operational datastore. The query is then run against the combined data and the results displayed to the user.

In Daniel J. Abadi et al, "SW-Store: a vertically partitioned DBMS for Semantic Web data management", The VLDB Journal; The International Journal on Very Large Data Bases, Springer, Berlin, DE, (20090204), vol. 18, no. 2, ISSN 0949-877X, pages 385 - 406, the reasons why current data management solutions for RDF data scale poorly are examined, and the fundamental scalability limitations of these approaches are explored. As an improvement, vertically partitioning the RDF data is proposed.

**SUMMARY**

Objects of the present application are achieved by subject matters of independent claims. Dependent claims define further exemplary embodiments.

A data storage and processing service is herein disclosed. The described service provides a scalable, interactive ad-hoc query system for analysis of nested data. By combining multi-level execution trees and columnar data layout, the described system and methods is capable of running rapid and efficient queries such as aggregation queries. A columnar storage representation for nested records, a prevalent data model that may be used in many web-scale and scientific datasets, is described. In accordance with an embodiment, a record is decomposed into column stripes, each column encoded as a set of blocks, each block containing field values and repetition and definition level information. Level information is generated using a tree of field writers, whose structure matches the field hierarchy in the record schema. The record can be assembled from the columnar data efficiently using a finite state machine that reads the field values and level information for each field and appends the values sequentially to the output records. Compared with traditional solutions that extract all of the data fields from every record, a finite state machine can be constructed that accesses a limited amount of data fields in all or a portion of the records (e.g., a single data field in all of the records). Moreover, by storing additional metadata such as constraint information with the columnar storage representation, additional types of queries can be supported.

A multi-level serving tree is used to execute queries. In one embodiment, a root server receives an incoming query, reads metadata from the tables, and routes the queries to a next level in the serving tree. Leaf servers communicate with a storage layer or access the data on local storage, where the stored data can be replicated, and read stripes of nested data in the columnar representation. Each server can have an internal execution tree corresponding to a physical query execution plan, comprising a set of iterators that scan input columns and emit results of aggregates and scalar functions annotated with level information. In another embodiment, a query dispatcher is provided which schedules queries based on their priorities and balances the load. The query dispatcher also provides fault tolerance when one server becomes much slower than others or as a replica becomes unreachable. The query dispatcher can compute a histogram of processing times for execution threads on the leaf servers and reschedule to another server when processing time takes a disproportionate amount of time.

A web service may provide users remote access to the query system and a supporting data storage system. Users of the web service may upload data to the data storage system for hosted storage. A portion of uploaded data may include collections of nested records and may be stored as an object. The web service may provide remote data hosting for multiple users, allowing the multiple users to stream data to the web service and aggregate the data in a single location. Users may create tables on which to perform queries, and may import the data in one or more objects stored in the data storage system into the tables. The import process can include converting nested records in an object into columnar data, and storing the columnar data in a different data layer than the objects. Thus, from a user's perspective, a table may be filled with data from objects, but actually may instead reference underlying sets of columnar data. In this case, queries of the tables by web service users may cause the query system to query particular columns of data that underlie the tables.

The columnar data may be queried *in situ*. Maintaining the columnar data on a common storage layer and providing mechanisms to assemble records from the columnar data enables operability with data management tools that analyze data in a record structure. The system may scale to numerous CPUs and be capable of rapidly reading large amounts of data. Particular embodiments can be implemented, in certain instances, to realize one or more of the following advantages. Nested data may be operated on *in situ,* such that the data may be accessed without loading the data with a database management system. Queries of nested data may be performed in a reduced execution time than required by other analysis programs. A columnar storage data structure that is implemented on a common storage layer enables multiple different analysis programs to access the columnar storage data structure.

As an alternative to the attached claims and the embodiments described in the below description, the present invention could also be described by one of the following embodiments:

Embodiment 1 is directed to a computer-implemented method. The method comprises receiving, at a server system and from a remote computing device, a request to store data at the server system. The method comprises storing, by the server system, the data identified in the request as an object in a repository at the server system. The method comprises receiving, at the server system and from a remote computing device, a request to create a table, wherein the request identifies a name for the table. The method comprises creating, by the server system and at the server system, the table with the name identified in the request. The method comprises receiving, at the server system, a request to import the data in the object into the table. The method comprises importing, by the server system, the data in the object into the table, wherein importing the data in the object into the table includes: (i) converting the data in the object into columnar stripes, and (ii) storing the columnar stripes in association with the table. The method comprises receiving, at the server system and from a remote computing device, a request to perform a query on the table, wherein the request includes the query and identifies the table. The method comprises performing the query on the table, wherein performing the query includes querying one or more of the columnar stripes.

Embodiment 2 is related to the method of embodiment 1, wherein the repository includes a collection of buckets and the request to store the data identifies a bucket from the collection, each bucket having a name that is unique among buckets in the repository, and each bucket providing a namespace to objects that are stored in each bucket; and wherein storing the data includes storing the object in the bucket identified in the request to store the data.

Embodiment 3 is directed to the method of embodiment 2, wherein the repository stores buckets in a flat namespace such that buckets are not nested.

Embodiment 4 is directed to the method of embodiment 2, wherein a bucket in the collection provides multiple different remote computing devices that correspond to different authenticated user accounts an ability to upload data from the different remote computing devices to the bucket.

Embodiment 5 is directed to the method of any one of embodiments 1-4, wherein the request to store data, the request to create the table, and the request to perform the query are received at the server system through application programming interfaces and from one or more remote computing devices that submit the requests over the internet.

Embodiment 6 is directed to the method of any one of embodiments 1-5, wherein the method further comprises receiving, at the server system and from a remote computing device, a request to establish a continuous import service, the request identifying a bucket to monitor for newly stored objects and a table in which data in the newly stored objects is to be imported; and wherein the request to import the data in the object into the table is received from the continuous import service operating at the server system in response to the continuous import service determining that the object is newly stored in the bucket.

Embodiment 7 is directed to the method of embodiment 6, wherein the method further comprises deleting the object from the repository in response to importing the data in the object into the table.

Embodiment 8 is directed to the method of any one of embodiments 1-7, wherein the data includes a collection of structured records and the collection of structured records are stored in the object, and wherein importing the data in the object into the table includes converting the structured records stored in the object into columnar stripes that each includes values for a field of the structured records.

Embodiment 9 is directed to the method of embodiment 8, wherein a particular one of the structured records includes multiple values for a particular field, and wherein the multiple values for the particular field are stored in a particular columnar stripe.

Embodiment 10 is directed to the method of embodiment 9, wherein the particular record includes multiple values for another field, and wherein the multiple values for the other field are stored in a different columnar stripe.

Embodiment 11 is directed to the method of embodiment 10, wherein the particular columnar stripe stores, in an adjacent relationship, values for the particular field from multiple of the records.

Embodiment 12 is directed to the method of embodiment 11, wherein the particular record includes nested sets of values for fields.

Embodiment 13 is directed to the method of embodiment 8, wherein a schema specifies a structure of the structured records in the collection; and wherein the method further comprises: receiving, at the server system and from a remote computing device, a request to extend the schema to include a new field; and generating, by the server system, a new columnar stripe for the new field without modifying the columnar stripes.

Embodiment 14 is directed to the method of embodiment 8, wherein a schema specifies a structure of the structured records in the collection; and wherein the method further comprises: receiving, at the server system and from a remote computing device, a request to change an existing name of a field in the schema to a new name of the field; and designating, by the server system, the new name as an alias of the existing name so that data identified with a field of the existing name and data identified with a field of the new name are stored in a same columnar stripe.

Embodiment 15 is directed to the method of any one of embodiments 1-14, wherein creating the table includes generating, in the repository, a delegate object having the name of the table.

Embodiment 16 is directed to the method of embodiment 15, wherein creating the table includes generating in a database metadata for the table, the delegate object references the metadata for the table so that the metadata is accessed when the server system performs an operation on the delegate object.

Embodiment 17 is directed to the method of any one of embodiments 1-16, wherein the table is a structured data set that is configured to be queried by the server system.

Embodiment 18 is directed to the method of any one of embodiments 1-17, wherein the object and the one or more columnar stripes are replicated among geographically dispersed computing devices that form the server system.

Embodiment 19 is directed to a computer-implemented method. The method comprises transmitting, by a computing device and to a remote server system, a request to store data at the server system such that, in response to receiving the request, the server system stores the data identified in the request as an object in a repository at the server system. The method comprises transmitting, by the computing device and to the server system, a request to create a table, the request identifying a name for the table, such that, in response to receiving the request, the server system creates the table with the name identified in the request. The method comprises transmitting, by the computing device and to the server system, a request to import the data in the object into the table such that, in response to receiving the request, the server system imports the data in the object into the table, wherein importing the data in the object into the table includes: (i) converting the data in the object into columnar stripes, and (ii) storing the columnar stripes in association with the table. The method comprises transmitting, by the computing device and to the server system, a request to perform a query on the table, the request including the query and identifying the table, such that, in response to receiving the request, the server system performs the query on the table, wherein performing the query includes querying one or more of the columnar stripes.

Other embodiments of the described aspects include corresponding computer-readable storage devices storing instructions that, when executed by one or more processing devices, perform operations according to the above-described methods. Other embodiments may include systems and apparatus that include the described computer-readable storage devices and that are configured to execute the operations using one or more processing devices.

Embodiment 20 includes a system that comprises: an object storage repository, at a server system, configured to store, as an object, data that is transmitted from a remote computing device; a table management system, at the server system, configured to, in response to a request from a remote computing device to create a table, create the table; an import job manager at the server system configured to, in response to a request from a remote computing device to import the data in the object into the table, import the data in the object into the table, wherein importing the data in the object into the table includes: (i) converting the data in the object into columnar stripes, and (ii) storing the columnar stripes in association with the table; and a columnar data processing system at the server system configured to, in response to a request, from a remote computing device to perform a query, perform the query on the table, wherein performing the query includes querying one or more of the columnar stripes.

The details of one or more embodiments are set forth in the accompanying drawings and the description below. Other features, objects, and advantages will be apparent from the description and drawings, and from the claims.

## DESCRIPTION OF DRAWINGS

Figure 1 illustrates record-wise v. columnar representation of nested data.

Figure 2 illustrates two sample nested records and their schema.

Figure 3 illustrates column-striped representations of the sample nested records.

Figure 4 is an algorithm for dissecting a record into columns.

Figure 5 illustrates an automaton for performing complete record assembly.

Figure 6 illustrates an automaton for assembly records from two fields, and the records that the automaton produces.

Figure 7 is an algorithm for constructing a record assembly automaton.

Figure 8 is an algorithm for assembling a record from columnar data.

Figure 9 depicts a sample query that performs projection, selection, and within-record aggregation.

Figure 10 illustrates a system architecture and execution inside a server node.

Figure 11 is a table illustrating the datasets used in the experimental study.

Figure 12 is a graph that illustrates the performance breakdown that may occur when reading from a local disk.

Figure 13 is a graph that illustrates execution of both MapReduce and the described system on columnar v. record-oriented storage.

Figure 14 is a graph that illustrates the execution time as a function of serving tree levels for two aggregation queries.

Figure 15 is a graph that illustrates histograms of processing times.

Figure 16 is a graph that illustrates execution time when the system is scaled from 1000 to 4000 nodes using a top-k query.

Figure 17 is a graph that illustrates a percentage of processed tables as a function of processing time per tablet.

Figure 18 is a graph that illustrates query response time distribution in a monthly workload.

Figure 19 is a block diagram of a system for generating and processing columnar storage representations of nested records.

Figure 20 is a flow chart of an example process for generating columnar data.

Figure 21 is a block diagram illustrating an example of a system that implements a web service for data storage and processing.

Figure 22 is a flowchart showing an example of a process for performing data storage and processing.

Figure 23 is a block diagram of computing devices that may be used to implement the systems and methods described in this document, as either a client or as a server or plurality of servers.

Like reference symbols in the various drawings indicate like elements.

## DETAILED DESCRIPTION

This document describes techniques, methods, systems, and mechanisms for a data storage and processing service. The described system may generate and process columnar storage representations of nested records. As an illustration, an organization may store data from web pages in records of nested information. The nested information may be compiled in a columnar data storage format that enables efficient queries of the data using a multi-level execution tree. The columnar data may be re-assembled into records for input into analysis programs that operate on record-oriented data.

More specifically, each record may be an instantiation of a schema that defines a formatting of records, where the records are created in accordance with the schema. For example, a schema may identify various fields for storing information about a web page and a structure for organizing fields in a record and their corresponding values. When an instance of a record for describing the characteristics of a web page is generated, the record may include for each field a data element and a corresponding value. The data element may define the semantics of the value in accordance with a definition in the schema. The term data element and field may be used interchangeably in this document. Field may also refer to a combination of a data element and a corresponding value.

A particular record may need not include all of the fields that are defined by a schema. Thus, the schema may serve as a 'template' from which fields may be selected for the particular record. For example, the schema may include a field for defining information about video content in a web page. If a web page does not include video content, then the record corresponding to the web page may not include the field from the schema that defines information about videos on the web page. Thus, some of the fields may be 'optional.'

Some of the fields in a record, however, may be 'required.' For example, a 'required' field in the schema may be a Uniform Resource Locator (URL) of a source location for the document that served the web page. The field may be required because every web page document may be retrieved from a source location (i.e., there is a URL available for every document) and because the field may be required to further process information on the web page (e.g., to determine if the content has changed).

A field may also be 'repeatable.' A field that is in the schema and that is defined as repeatable may be replicated at the location defined by the schema repeatedly in a instantiation of the schema (i.e., in a record). For example, a schema may include a field that is for defining documents that link to the web page. The schema may only specify the field a single time, but may indicate that the field is repeatable (e.g., because several documents may link to a particular web page). Thus, a record for the web page may include multiple fields that identify a value for a linking web page. The repeated fields may be located at a same level and nested beneath a parent field in the record (as discussed in more detail below).

The fields of the schema (and thus the fields in the records) may be nested. In other words, some fields may be children of other fields, which may be referenced as the parent fields, grandparent fields, etc. In some examples, children nodes are those nodes in the schema that are found within a pair of opening and closing curly brackets immediately following the parent node. Other implementations for nesting, however, may be utilized (e.g., the use of a start tag for the field and an end tag for the field). Thus, except for the fields that are at the highest level (e.g., the fields that are not children of any other fields), each field may have a parent field.

Nesting may be helpful for organizing information into conceptually-related chunks of information. Returning to our earlier example, the schema may include a 'Video' field. The 'Video' field may include several children fields that may identify the characteristics of the video (e.g., how long the video is, the format of the video, and the resolution of the video). Thus, when a record is constructed, children nodes may not be placed in the record if their parent nodes are not present. In other words, a record for a web page that does not include a video may not include a 'Video Length' field because the record does not include a 'Video' field (i.e., the parent of the 'VideoLength' field). Application programs that enable viewing and editing a record may visually nest the dependent children off of the parent children (e.g., indent the children to the right of the parent field).

Analyzing millions of records may be time consuming. In some examples a user is interested in a data from a single field, but each of the records must be accessed in its entirety. For example, a user may request that an analysis program check each of millions of records to identify those records that are associated with web pages that include videos that are longer than ten minutes and that have a 'High' resolution. Because each record may be stored as a separate data structure, each entire record may need to be loaded into a database management system in order to query the record to determine if the record includes the particular combination of video length and resolution.

Such a loading of every single record may be prohibitively expensive, both on the quantity of servers that are required to perform the task and an amount of time necessary to complete the query. Significant time savings can be obtained by storing all of the values for a particular field - selected from across the millions of records - together in a contiguous portion of memory. Such storage of values from several records but for a particular field is called columnar storage. In contrast, the example where information for a particular record is stored contiguously in memory is referred to as record-oriented storage.

Columnar storage for nested records, however, poses unique difficulties. A field in a record may be identified by its path, which may include a listing of the field and the parent fields (e.g., GrandParent.Parent.Child). Because one or more of the fields in the path may be repeating, there may be several instances of a field with the same path name. Thus, when looking at a consecutive listing of columnar data for a particular field, a mechanism is needed to identify which values belong to which records, and for those records that include multiple values for a particular path, what is the respective location of the value in the record. In other words, given a sequence of values in a columnar structure, a mechanism is needed to reconstruct the structure of the record from the values.

The mechanism for reconstructing the structure of a record from columnar data includes storing, for each value in the columnar data, a 'repetition' level and a 'definition' level. Each 'level' is a sequence of bits that represents a number. For example, a 'level' of 3 may be represented by two bits (e.g., '11'). In another example, a 'level' of 5 may be represented by three bits (e.g., '101').

The 'repetition' level that is stored for a particular value indicates the field in the value's path that has most recently repeated. As an illustration, a column of values may be stored for a field with the path 'Video.Resolution.Width.' A repetition level of '1' may indicate that the 'Video' field most recently repeated, while a repetition level of '2' may indicate that the 'Resolution' field most recently repeated. Recently repeating can indicate, from the position of the value in the record from which the value was selected and working upwards towards the beginning of the document, which field in the path 'Video.Resolution.Width' is the first to reach a count of two (e.g., which field is encountered for the second time first).

For example, working upwards from the location of the 'Width' value, each field is encountered a single time. Finding a second instance of each field requires traversing to the depths of the next, adjacent nested field (and possibly to further nestings). Thus, a 'Video' field may be encountered that does not include any 'Resolution' children (e.g., because the 'Resolution' field is optional or a repeating field). Thus, the 'Video' field has been encountered a second time and is thus the most recently repeated field. A repetition level of '1' is assigned to the value.

A repetition level of '0' may indicate that the field does not include a most recently repeated value (e.g., it has been encountered for the first time in the record during a top-down scan). In various examples, a 'required' field in a path does not have a repetition level. For example, if the 'Resolution' field is required for the 'Video.Resolution.Width' path, the range of resolution levels may be either '0' or '1.' 'Resolution' may not have a level because it is always present in the record when the 'Video' field is present. Thus, if 'Resolution' was assigned a level of '2,' it may always be encountered before 'Video' and thus a level of '1' may not ever be assigned. Thus, not including a repetition level for required fields may enable a number of different resolution levels to be reduced, and a number of bits to represent the resolution level may be reduced.

If the field 'Width' in the above example is an 'optional' or 'repeating' field, a record may not always include a value for the 'Width' field. Thus, a column of values for the 'Video.Resolution.Width' path may use a mechanism to designate when a 'Video' or a Video. Resolution' path is found in the record but the 'Width' field has not been instantiated in the record. This mechanism may include storing, in the 'Video.Resolution.Width' column of data, a 'Definition' level for each 'Video' or 'Video.Resolution' field in the record regardless whether the 'Width' field is instantiated. The 'Definition' level may indicate how many of the fields in the 'Video.Resolution.Width' path that could be missing (e.g., because the field is optional or repeatable) are actually present.

Thus, if the field 'Video' is present in the record but no corresponding 'Resolution' child is instantiated, a definition level of '1' may be recorded in the 'Video.Resolution.Width' column. If the field 'Video.Resolution' is present in the record, but no corresponding 'Width' child is instantiated, a definition level of '2' may be recorded. If the field 'Video.Resolution.Width' is present in the record, a definition level of '3' may be recorded.

Therefore, whenever the 'Definition' level (which represents the number of fields that could be undefined but are actually defined) is less than the number of fields that could be defined, a missing occurrence of the 'Width' field may be identified. The combination of the 'Repetition' level and the 'Definition' level may enable the structure of the record to be reconstructed.

A column of data for a particular field (e.g., the 'Video.Resolution.Width' field) may include the values for the field from multiple records, corresponding repetition and definition levels (acknowledging that some 'missing' values may have a repetition and a definition level), and header information. In some examples, the values are stored consecutively and adjacent. In other words, if a value for one 'Video.Resolution.Width' field was '700' and the value for a next 'Video.Resolution.Width' field was '800,' a portion of the column as stored in memory may read '700800.' In this example, a header in the column may identify that the each value has a fixed width (e.g., a fixed binary representation to hold the numbers 700 and 800).

In some examples, the stored values are represented by strings. For example, instances of the 'Width' field may include the values 'Small' and 'Medium.' In some examples, the various string values may be a fixed length (e.g., a null value may be added to the beginning or end of the 'Small' value to make the string the same length as the 'Medium' value). In some examples, however, each stored string may include an identifier in a beginning portion of the string that identifies a length of the string. For example, the 'small' value may include an identifier that indicates that the string is five digits long (or a corresponding number of binary bits).

Because the values may be stored consecutively in the columnar stripe, the 'repetition' and 'definition' levels may be stored at the beginning of the columnar stripe. In some examples, the 'repetition' and 'definition' levels are stored in pairs for a particular value (whether instantiated or missing). As an illustration, a repetition level of 3 may be stored in the first four bits of a byte and a definition level of 1 may be stored in the last four bits of the byte. A next byte in the header may include a repetition level and a definition level for the next instance of the field in the record (or the first instance in the subsequent record).

The number of bits used to represent the repetition and definition levels may be based on a maximum level value. For example, if the maximum repetition level is 3, the repetition level may be represented with two bits. If the maximum repetition level is 4 the repetition level may be represented with three bits. The header may include information that identifies the length of the repetition and definition levels.

In various examples, the repetition levels may be stored consecutively in memory and the definition levels may be stored consecutively in memory (e.g., not in pairs). In various examples, the repetition and definition levels may be stored in a group with their corresponding value (if the value is instantiated). In other words, a sequence of information in the columnar stripe may read Value1:RepetitionLevel1:DefinitionLevel1:Value2:RepetitionLevel2:DefinitionLeve 12, and so on.

The columnar stripes may be compressed into blocks of information. For example, each columnar stripe may be split into a set of blocks, with each block including its own respective header. A first block may include the first 800,000 values and a second block may include a second 800,000 values from a stripe of 1.6 million values. A block header may include the repetition and definition levels along with additional information that may be used to help analyze the portion of the columnar stripe that is represented by the block, and to reconstruct the columnar stripe.

In some examples, the block header includes an 'Assertion' value that defines a type of data that is found in the block's values. For example, a block for the 'Video.Resolution.Width' field may not include any values that list 'Large' width resolution. Thus, the 'Assertion' value may indicate that the values only include 'Small' and 'Medium' values. If a query is performed for records that include 'High' width resolution videos, then the described block may be avoided by the querying system.

The system described in this document may perform queries on columnar stripes without reconstructing the information in the columnar stripes into records, and without loading information from the columnar stripes into a database (e.g., without using 'Insert' clause). Thus, the data may be accessed *in situ,* which may provide computational analysis time savings on the order of magnitudes.

The querying system may employ many of the clauses employed for querying relational databases. Additional clauses that are specific to non-relational data, however, may be employed. For example, a WITHIN clause may allow for operations to be performed on multiple instances of a field within a single record or a portion of a record. A relational database, however, may be unable to store more than a single instance of a field in a row (e.g., a representation of a record). Thus, a query on a relational database may be fundamentally unable to perform queries 'within' a record.

As an example of the WITHIN clause, values for a particular field may be multiplied. Supposing that the query instructions request that all values for 'MutualFund.InterestRate' be multiplied together for a particular record (where each record may be for a particular account holder). The querying system may find all of the 'MutualFund.InterestRate' values within the single record and multiply them together.

Another example of a clause that may be specific to non-relational nested data is the OMIT IF clause. This clause may enable a record to be filtered to remove instances of fields if a particular condition is met (e.g., a new columnar stripe or record may be created with specified fields removed). As an illustration, a stripe of values that list employee salaries may be queried and a new stripe that removes employee's with salaries above $90,000 may be generated using the OMIT IF clause.

The querying system may be hosted by a server system and provided over the internet to remote computing devices through application programming interfaces (API). In general, the columnar data may be represented to external users of the remote computing devices as stored within tables of information. The users may generate the tables using API calls and may fill the tables with data from a repository of objects.

The users may use separate API calls to load objects into the repository. For example, the server system may also implement an internet-accessible storage system that enables users to push data to the server system for remote hosting. In this manner, the data storage service may serve as a repository for data aggregated from many geographically dispersed computing devices. For example, internet website logs may be streamed by hundreds of computers to the storage system and be stored as individual objects in one or more "buckets" at the repository. A given bucket may have an access control list that determines which computing devices or user accounts are authorized to upload objects to the bucket or to access objects in a bucket. Similarly, individual objects may have associated access control lists that control which devices or user accounts are able to access or manipulate the object.

A user may explicitly request that the data in objects in a bucket be transferred to a table, or may establish a service that monitors the bucket and transfers the data in newly placed objects into the table. In some implementations, the transfer of data in the objects to the table may include converting the data format of the objects to a different format, generating columnar stripes for the data in the records, and placing the columnar stripes in a different repository. Metadata for the table may be updated to reference the columnar stripes that include the converted data for the imported objects.

Thus, in some implementations, when the querying service receives a request to query a table, the metadata for the table is located and a query is performed on the columnar data that underlies the table. The output of the query may be placed in a different table, provided to the remote device requesting the query, or may be stored in the repository of objects as an object (e.g., an object that includes a collection of records).

## 1. INTRODUCTION

Large-scale parallel computing may be performed using shared clusters of commodity machines. *See* L. A. Barroso and U. Holzle. The Datacenter as a Computer: An Introduction to the Design of Warehouse-Scale Machines. Morgan & Claypool Publishers, 2009. A cluster may host a multitude of distributed applications that share resources, have widely varying workloads, and run on machines with different hardware parameters. An individual computing machine in a distributed application may take much longer to execute a given task than others, or may never complete due to failures or preemption by a cluster management system. Hence, dealing with stragglers (e.g., computing tasks with significant latency) and failures may achieve fast execution and fault tolerance. *See* G. Czajkowski. Sorting 1PB with MapReduce. Official Google Blog, Nov. 2008. At http://googleblog.blogspot.com/2008/11/sorting-1pb-with-mapreduce.html.

The data used in web and scientific computing is often nonrelational. Hence, a flexible data model may be beneficial in these domains. Data structures used in programming languages, messages exchanged by distributed systems, web traffic logs, etc. may lend themselves to a nested representation. For example, a nested representation of data may include a multiple fields that each include several levels of children fields. Some of the children fields may include corresponding data. Normalizing and recombining such data at web scale may be computationally expensive. A nested data model underlies some of the structured data processing at major web companies.

This document describes a system that supports interactive analysis of very large datasets over shared clusters of commodity machines. Unlike traditional databases, it is capable of operating on *in situ* nested data. *In situ* refers to the ability to access data 'in place', for example, in a distributed file system like Google File System (*see* S. Ghemawat, H. Gobioff, and S.-T. Leung. The Google File System. In *SOSP,* 2003) or another storage layer like Bigtable (*see* F. Chang, J. Dean, S. Ghemawat, W. C. Hsieh, D. A. Wallach, M. Burrows, T. Chandra, A. Fikes, and R. Gruber. Bigtable: A Distributed Storage System for Structured Data. In *OSDI,* 2006).

The system can execute many queries over such data that may ordinarily require a sequence of MapReduce jobs, but at a fraction of the execution time. *See* J. Dean and S. Ghemawat. MapReduce: Simplified Data Processing on Large Clusters. In OSDI, 2004. The described system may be used in conjunction with MapReduce to analyze outputs of MapReduce pipelines or rapidly prototype larger computations. Examples of using the system include:

- Analysis of web logs and crawled web documents;
- Install data for applications served by an online marketplace;
- Crash data for application products;
- Multimedia playback statistics;
- OCR results from scans of books;
- Spam analysis;
- Debugging of map tiles;
- Tablet migrations in managed Bigtable instances;
- Results of tests run on a distributed build system;
- Disk I/O statistics for hundreds of thousands of disks;
- Execution logs of MapReduce jobs across several data centers; and
- Symbols and dependencies in a codebase.

The described system builds on ideas from web search and parallel database management systems. First, its architecture builds on the concept of a serving tree used in distributed search engines. *See* J. Dean. Challenges in Building Large-Scale Information Retrieval Systems: Invited Talk. In WSDM, 2009. Like a web search request, a query gets pushed down the tree and rewritten at each step. The result of the query is assembled by aggregating the replies received from lower levels of the tree.

Second, the described system provides a high-level, SQL-like language to express ad hoc queries. In contrast to layers such as Pig (*see* C. Olston, B. Reed, U. Srivastava, R. Kumar, and A. Tomkins. Pig Latin: a Not-so-Foreign Language for Data Processing. In SIGMOD, 2008.) and Hive (Hive. http://wiki.apache.org/hadoop/Hive, 2009), the querying system executes queries natively without translating them into MapReduce jobs.

Lastly, the described system uses a column-striped storage representation, which enables it to read less data from secondary storage and reduce CPU cost due to cheaper compression. Column stores for analyzing relational data, (D. J. Abadi, P. A. Boncz, and S. Harizopoulos. Column-Oriented Database Systems. VLDB, 2(2), 2009), are not believed to have extended to nested data models. The columnar storage format that is described may be supported by MapReduce, Sawzall (see R. Pike, S. Dorward, R. Griesemer, and S. Quinlan. Interpreting the Data: Parallel Analysis with Sawzall. Scientific Programming, 13(4), 2005), and FlumeJava (*see* C. Chambers, A. Raniwala, F. Perry, S. Adams, R. Henry, R. Bradshaw, and N. Weizenbaum. FlumeJava: Easy, Efficient Data-Parallel Pipelines. In PLDI, 2010).

In Section 4, this document describes a columnar storage format for nested data. Algorithms are presented for dissecting nested records into columns and reassembling them.

In Section 5, a query language for processing data in that is stored in the columnar storage format is described. The query language and execution of the language are designed to operate efficiently on column-striped nested data and do not require restructuring of nested records.

In Section 6, an illustration of applying execution trees that are used in web search serving systems to database processing is provided. The benefits for answering aggregation queries efficiently is explained.

In Section 7, experiments conducted on system instances are presented.

SECTION 2: EXAMPLE SCENARIO

Suppose that Alice, an engineer at a web-search company, comes up with an idea for extracting new kinds of signals from web pages. She runs a MapReduce job that cranks through the input data that includes content from the web pages and produces a dataset containing the new signals, stored in billions of records in a distributed file system. To analyze the results of her experiment, she launches the system described in this document and executes several interactive commands:

```
DEFINE TABLE t AS /path/to/data/*
SELECT TOP(signal1, 100), COUNT(*) FROM t
```

Alice's commands execute in seconds. She runs a few other queries to convince herself that her algorithm works. She finds an irregularity in signal1 and digs deeper by writing a FlumeJava program that performs a more complex analytical computation over her output dataset. Once the issue is fixed, she sets up a pipeline which processes the incoming input data continuously. She formulates a few canned SQL queries that aggregate the results of her pipeline across various dimensions, and adds them to an interactive dashboard (e.g., a web page about a service that explains the service and details statistics on the service). Finally, she registers her new dataset in a catalog so other engineers can locate and query the dataset quickly.

The above scenario may require interoperation between the query processor and other data management tools. The first ingredient for such interoperation is a common storage layer. The Google File System is one such distributed storage layer that may be used. The Google File System manages very large replicated datasets across thousands of machines and tens of thousands of disks.

Replication helps preserve the data despite faulty hardware and achieve fast response times in presence of stragglers. A high-performance shared storage layer is a key enabling factor for *in situ* data management. It allows accessing the data without a time-consuming loading phase, which is a major impedance to database usage in analytical data processing (where it is often possible to run dozens of MapReduce analyses before a database management system is able to load the data and execute a single query). For example, when a database management system is used to analyze data, the database may need to be loaded with data using 'Insert' commands. Such loading may not be required by the described system. As an added benefit, data in a file system can be conveniently manipulated using standard tools, e.g., to transfer to another cluster, change access privileges, or identify a subset of data for analysis based on file names.

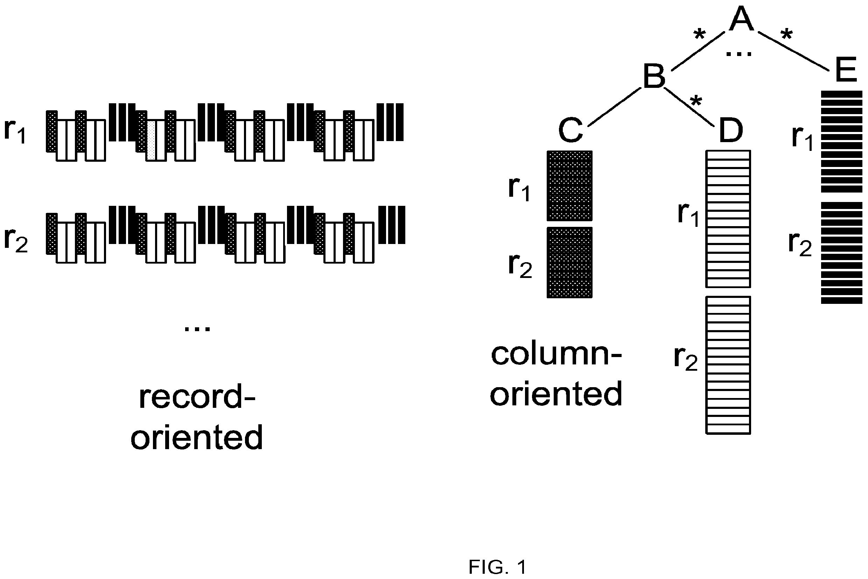

A second ingredient for building interoperable data management components is a shared storage format. Columnar storage is used for flat relational data but adapting columnar storage to a nested data model allows the technique to be applied to web data. Figure 1 illustrates the idea that all values of a nested field in a data structure are stored contiguously. For example, in the column-oriented representation of nested data, all values for a particular nested field within a data structure (e.g., the field A.B.C) are stored adjacent to each other and contiguously in memory. Hence, values for the field A.B.C can be retrieved from memory without reading values from the field A.E and values from the field A.B.D.

Additionally, values for the same particular field in different instances of a data structure (e.g., a 'record') may be stored contiguously. For example, the values for field A.B.C for the record 'r1' are stored adjacent to the values for the same field for the record 'r2.' To the contrary, in the 'record-oriented' representation of nested data, values for all fields within a particular record are stored contiguously. In other words, the data values for a particular field are not bunched together.

The challenge that the described columnar storage format addresses is how to preserve all structural information and be able to reconstruct records from an arbitrary subset of fields. This document next discusses the data model from which the fields in the columnar storage format may be filled, and then turn to algorithms for processing the columnar storage and query processing on data in the columnar storage.

SECTION 3: DATA MODEL

This section describes the data model used by the described system and introduces some terminology used later. The described Protocol Buffers data model originated in the context of distributed systems, and is available as an open source implementation. *See* (Protocol Buffers: Developer Guide. Available at http://code.google.com/apis/protocolbuffers/docs/overview.html). The data model is based on strongly-typed nested records. Its abstract syntax is given by:

$$\tau = dom \mid <A_1 : \tau \, [*|?], \ldots, A_n : \tau \, [*|?]>$$

where $\tau$ is an atomic type or a record type. Atomic types in *dom* comprise integers, floating-point numbers, strings, etc. Records consist of one or multiple fields. Field i in a record has a name $A_i$ and an optional multiplicity label. Repeated fields (*) may occur multiple times in a record. They are interpreted as lists of values, i.e., the order of field occurrences in a record is significant. Optional fields (?) may be missing from the record. Otherwise, a field is required (e.g., must appear exactly once).

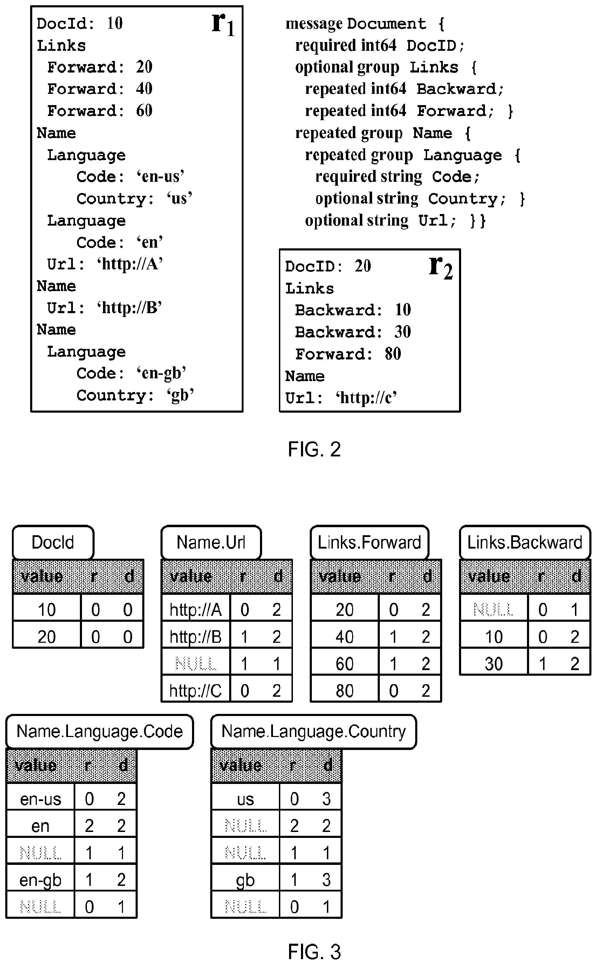

As an illustration, Figure 2 depicts a schema that defines a record type 'Document,' which represents a web document. The schema definition uses the Protocol Buffers syntax. A 'Document' has a required integer 'DocId' and optional 'Links,' containing a list of 'Forward' and 'Backward' entries holding 'DocIds' of other web pages. A 'Document' can have multiple 'Names,' which are different URLs by which the document can be referenced. A 'Name' contains a sequence of 'Code' and (optional) 'Country' pairs. Figure 2 also shows two sample records, r1 and r2, that conform to the schema. The record structure is outlined using indentation. The sample records r1 and R2 in Figure 2 are used explain the algorithms throughout this document. The fields defined in the schema form a tree hierarchy. The full path of a nested field is denoted using a dotted notation, e.g., Name.Language.Code is the full path name for the 'Code' field depicted in Figure 2.

The nested data model backs a platform-neutral, extensible mechanism for serializing structured data. Code generation tools produce bindings for different programming languages such as C++ or Java. Cross-language interoperability is achieved using a standard binary on-the-wire representation of records, in which field values are laid out sequentially as they occur in the record. This way, a MapReduce program written in Java can consume records from a data source exposed via a C++ library. Thus, if records are stored in a columnar representation, assembling them fast may assist interoperation with MapReduce and other data processing tools.

## SECTION 4: NESTED COLUMNAR STORAGE

As illustrated in Figure 1, a goal is to store all values of a given field consecutively to improve retrieval efficiency. In this section, the challenges of lossless representation of record structure in a columnar format (Section 4.1), fast encoding (Section 4.2), and efficient record assembly (Section 4.3) are addressed.

## SECTION 4.1: REPETITION AND DEFINITION LEVELS

A consecutive list of values alone do not convey the structure of a record. Given two values of a field that is repeated in a record, a system may not be able to determine at what 'level' the value is repeated (e.g., whether the two values are from different records or are from the same record). Likewise, if an optional field is missing from a record, values alone may not convey which enclosing records were defined explicitly and which were not. The concepts of repetition and definition levels are thus introduced. Figure 3 includes tables that summarize the repetition and definition levels for atomic fields in the sample records that are depicted in Figure 1.

Repetition Levels. Consider the field 'Code' in Figure 2. It occurs three times in record 'r1.' Occurrences 'en-us' and 'en' are inside the first 'Name' field, while 'en-gb' is in the third 'Name' field. To disambiguate these occurrences in the columnar structure, a repetition level is attached to each value that is to be stored in the columnar structure. The repetition level indicates at what repeated field in the field's path the value has repeated. For example, the field path Name.Language.Code contains two fields that are repeated, 'Name' and 'Language.' Hence, the repetition level of Code ranges between 0 and 2. Level 0 denotes the start of a new record, level 1 denotes a recent repetition at the 'Name' field, and level 2 denotes a recent repetition at the 'Language' field.

As an illustration of determining the level for a field, record 'r1' may be scanned from the top down. The value 'en-us' is first encountered and a check may be performed to identify the field in the Name.Language.Code path that has most recently repeated in the record. In this example, none of the fields have been repeated and thus, the repetition level is 0. The value 'en' is next encountered for the Name.Language.Code path and the field 'Language' is identified as the field that has most recently repeated. For example, scanning upwards from the value 'en,' the first field in the Name.Language.Code path that repeats is 'Language.' Thus, the repetition level is 2 (e.g., because '2' corresponds to the 'Language' field because 'Language' is the second field in the Name.Language.Code path that repeats). Finally, when the value 'en-gb' is encountered, the field 'Name' has repeated most recently (the 'Language' field occurred only once after Name), so the repetition level is 1. In other words, the repetition level for a value may be a number that represents a most recently repeated field. Thus, the repetition levels of Code values in record 'r1' are 0, 2, 1.

Notice that the second 'Name' field in record 'r1' does not contain any values for the field 'Code.' To determine that 'en-gb' occurs as a value for a field nested within the third instance of the field 'Name,' and not in the second instance, a NULL value is added between the values 'en' and 'en-gb' as they are stored in the columnar structure (see Figure 3). 'Code' is a required child field of the 'Language' field, so the fact that a value for the 'Code' field is missing implies that the 'Language' field is not also not defined. In general though, determining the level up to which nested records exist may require additional information.

Definition Levels. Each value of a field with path 'p,' especially every NULL value, has a 'definition level' that specifies how many fields in the path 'p' that could be undefined (e.g., because the fields are optional or repeated) are actually present in the record. To illustrate, observe that record 'r1' has no 'Backward' fields for the 'Links' field. Still, the field 'Links' is defined (at a level of 1). To preserve this information, a NULL value with definition level of 1 is added to the 'Links.Backward' column.

In other words, specifying a level of 1 for the 'Links.Backward' path indicates that '1' field that was optional or repeated (i.e., the 'Links' field) was defined in a path that includes two fields that are optional or repeated (i.e., the 'Links' field and the 'Backward' field). Thus, a definition of '1' indicates that the 'Backward' field was not instantiated. Similarly, the missing occurrence of 'Name.Language.Country' in record 'r2' carries a definition level 1, while its missing occurrences in record 'r1' have definition levels of 2 (inside 'Name.Language') and 1 (inside 'Name'), respectively. The encoding procedure outlined above may preserve the record structure losslessly.

Encoding. As stored in memory, each column that corresponds to a particular field may be stored with a header that includes a contiguous listing of repetition and definition values, followed by a contiguous listing of the substantive values. Each repletion and definition value may be stored as bit sequences (e.g., in a single byte). For example, the first four bits of a byte may be used to represent the repetition level for a particular value and the last four bits may be used to represent the definition level. In some examples, the header may include definitions of lengths of the number of bits so that delimiters may not be used. Thus, bits may only be used as necessary. For example, if the maximum definition level is 3, two bits per definition level may be used.

Thus, a representation of columnar data for a single field (e.g., the 'Name.Language.Code' field) may be stored in memory with a sequence of bytes representing the repetition and definition levels for a corresponding sequence of values, followed by a sequence of values. NULL values, however, may not be stored explicitly as they may be determined by analyzing the definition levels. For instance, any definition level that is smaller than the number of repeated and optional fields in a field's path can denote a NULL. Thus, a system may be able to determine where in the listing of consecutive values a NULL value should be inserted or inferred. In some examples, definition levels are not stored for values that are always defined. Similarly, repetition levels may only be stored if required. For example, a definition level of 0 implies a repetition level of 0, so the latter may be omitted. In fact, referencing the structures illustrated in Figure 3, no levels may stored for the 'DocId' field.

A representation of columnar data in memory may be broken up into a set of blocks. Each block may include a header that includes the repetition and definition level information, and a subsequent listing of the values for the field. Each header may include a 'constraint' value that indicates an allowable range of values in the block. Thus, the described system may identify which blocks include data that the system is interested in. The constraint can also indicate other properties of the values, e.g., whether the values have been sorted. In general, the 'constraint' may be thought of as an 'assertion' about what kind of values are found in the block. Each block may be compressed.

SECTION 4.2: SPLITTING RECORDS INTO COLUMNS

The above description presented an encoding of the record structure in a columnar format. A challenge is how to produce column stripes with repetition and definition levels efficiently. The base algorithm for computing repetition and definition levels is provided below. The algorithm recurses into the record structure and computes the levels for each field value. As illustrated earlier, repetition and definition levels may need to be computed even if field values are missing. Many datasets are sparse and it may not be uncommon to have a schema with thousands of fields, only a hundred of which are used in a given record. Hence, it may be beneficial to process missing fields as cheaply as possible. To produce column stripes, a tree of field writers is created, whose structure matches the field hierarchy in the schema. The basic idea is to update field writers only when they have their own data, and not try to propagate parent state down the tree unless absolutely necessary. To do that, child writers inherit the levels from their parents. A child writer synchronizes to its parent's levels whenever a new value is added.

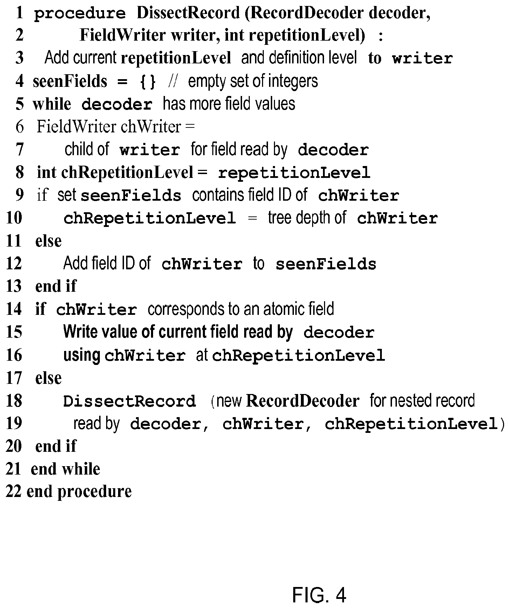

An example algorithm for decomposing a record into columns is shown in Figure 4. Procedure 'DissectRecord' is passed an instance of a 'RecordDecoder,' which is used to traverse binary-encoded records. 'FieldWriters' form a tree hierarchy isomorphic to that of the input schema. The root 'FieldWriter' is passed to the algorithm for each new record, with 'repetitionLevel' set to 0. The primary job of the 'DissectRecord' procedure is to maintain the current 'repetitionLevel.' The current 'definitionLevel' is uniquely determined by the tree position of the current writer, as the sum of the number of optional and repeated fields in the field's path.

The while-loop of the algorithm (Line 5) iterates over all atomic and record-valued fields contained in a given record. The set 'seenFields' tracks whether or not a field has been seen in the record. It is used to determine what field has repeated most recently. The child repetition level 'chRepetitionLevel' is set to that of the most recently repeated field or else defaults to its parent's level (Lines 9-13). The procedure is invoked recursively on nested records (Line 18).

The document above referenced 'FieldWriters' accumulating levels and propagating them lazily to lower-level writers. This may be performed by each non-leaf writer keeping a sequence of (repetition, definition) levels. Each writer also has a 'version' number associated with it. Simply stated, a writer version is incremented by one whenever a level is added. It is sufficient for children to remember the last parent's version they synced. If a child writer ever gets its own (non-null) value, it synchronizes its state with the parent by fetching new levels, and only then adds the new data.

Because input data may have thousands of fields and millions records, it may not be feasible to store all levels in memory. Some levels may be temporarily stored in a file on disk. For a lossless encoding of empty (sub)records, non-atomic fields (such as Name.Language in Figure 2) may need to have column stripes of their own, containing only levels but no non-NULL values.

SECTION 4.3: RECORD ASSEMBLY

Assembling records (e.g., records 'r1' and 'r2') from columnar data efficiently is critical for record-oriented data processing tools (e.g., Map Reduce). Given a subset of fields, a goal is to reconstruct the original records as if they contained just the selected fields, with all other fields stripped away. The key idea is to create a finite state machine (FSM) that reads the field values and levels for each field, and appends the values sequentially to the output records. An FSM state corresponds to a field reader for each selected field. State transitions are labeled with repetition levels. Once a reader fetches a value, the next repetition level is looked at to decide what next reader to use. The FSM is traversed from the start to end state once for each record.

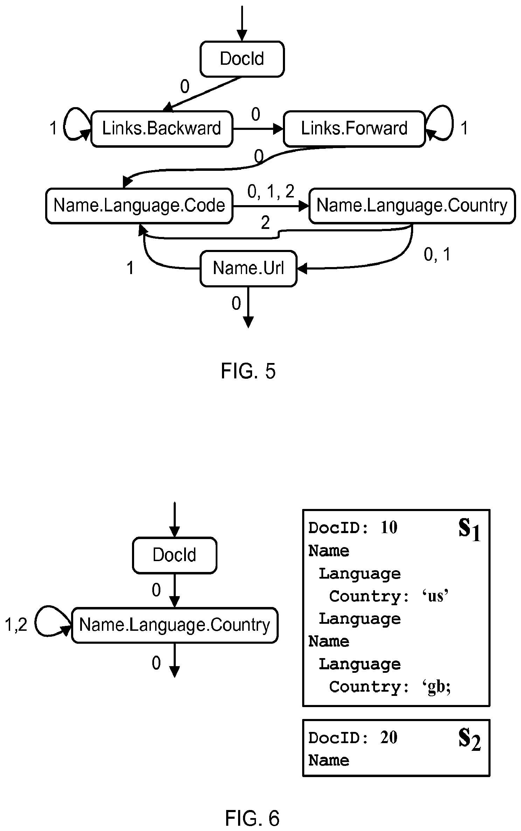

Figure 5 shows an FSM that reconstructs the complete records in our running example using as input the blocks described in Section 4.1. In this example, the nodes are labeled with fields and the edges are labeled with repetition levels. The start state is 'Docld.' Once a 'Docld' value is read, the FSM transitions to the 'Links.Backward' state. After all repeated 'Backward' values have been drained, the FSM jumps to 'Links.Forward,' etc.

To sketch how FSM transitions are constructed, let 'l' be the next repetition level returned by the current field reader for field 'f.' Starting at 'f' in the schema tree (e.g., the schema in Figure 2), its ancestor is found that repeats at level 'l' and select the first leaf field 'n' inside that ancestor. This provides an FSM transition ('f'; 'l') $\rightarrow$ n. For example, let 'l' = 1 be the next repetition level read by 'f' = 'Name.Language.Country.' Its ancestor with repetition level '1' is Name, whose first leaf field is 'n' = 'Name.Url.'

If only a subset of fields need to be retrieved, a simpler FSM that is cheaper to execute may be constructed. Figure 6 depicts an FSM for reading the fields 'Docld' and 'Name.Language.Country.' The figure shows the output records 's1' and 's2' produced by the automaton. Notice that the encoding and the assembly algorithm preserve the enclosing structure of the field 'Country.' This may be important for applications that need to access, e.g., the Country appearing in the first Language of the second Name. In XPath, this may correspond to the ability to evaluate expressions like /Name[2]/Language[1]/Country.

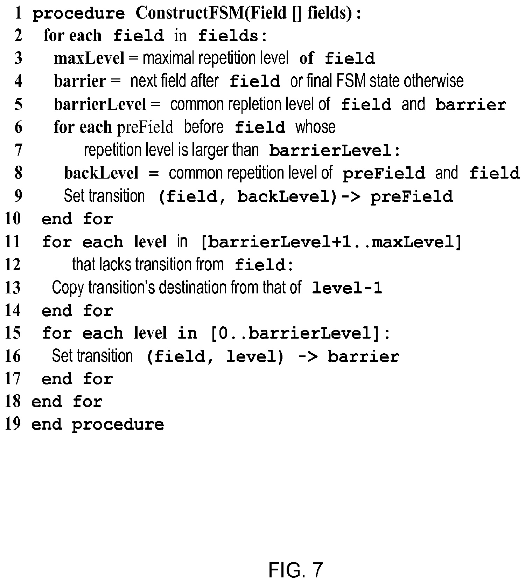

Construct FSM Procedure. Figure 7 shows an algorithm for constructing a finite-state machine that performs record assembly. The algorithm takes as input the fields that should be populated in the records, in the order in which they appear in the schema. The algorithm uses a concept of a 'common repetition level' of two fields, which is the repetition level of their lowest common ancestor. For example, the common repetition level of 'Links.Backward' and 'Links.Forward' equals 1. The second concept is that of a 'barrier', which is the next field in the sequence after the current one. The intuition is that each field is attempted to be processed one by one until the barrier is hit and requires a jump to a previously seen field.

The algorithm consists of three steps. In Step 1 (Lines 6-10), the common repetition levels are processed backwards. These are guaranteed to be non-increasing. For each repetition level encountered, the left-most field in the sequence is picked-that is the field that is to be transitioned to when that repetition level is returned by a 'FieldReader.' In Step 2, the gaps are filled (Lines 11-14). The gaps arise because not all repetition levels are present in the common repetition levels computed at Line 8. In Step 3 (Lines 15-17), transitions for all levels are set that are equal to or below the barrier level to jump to the barrier field. If a 'FieldReader' produces such a level, the nested record may continue to be constructed and there may be no need to bounce off the barrier.

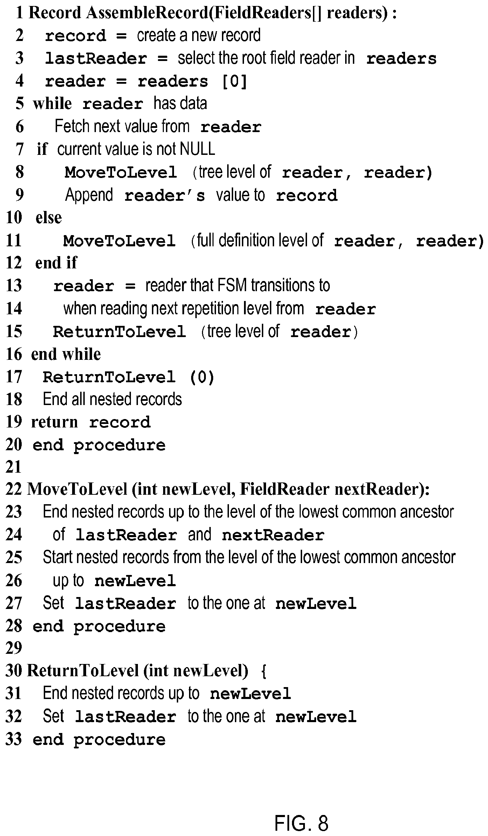

Assemble Record Procedure. An Assemble Record procedure (illustrated in Figure 8) takes as input a set of 'FieldReaders' and (implicitly) the FSM with state transitions between the readers. In other words, the algorithm operates on an FSM and columnar data and outputs constructed records. Variable reader holds the current 'FieldReader' in the main routine (Line 4). Variable Reader holds the last reader whose value is appended to the record and is available to all three procedures shown in Figure 7. The main while-loop is at Line 5. The next value is fetched from the current reader. If the value is not NULL, which is determined by looking at its definition level, the record being assembled is synchronized to the record structure of the current reader in the method 'MoveToLevel,' and the field value is appended to the record. Otherwise, the record structure may be adjusted without appending any value-which may be done if empty records are present. On Line 12, a 'full definition level' is used. Recall that the definition level factors out required fields (only repeated and optional fields are counted). Full definition level takes all fields into account.

Procedure 'MoveToLevel' transitions the record from the state of the 'lastReader' to that of the 'nextReader' (see Line 22). For example, suppose the 'lastReader' corresponds to Links. Backward' in Figure 2 and 'nextReader' is 'Name.Language.Code.' The method ends the nested record Links and starts new records Name and Language, in that order. Procedure 'ReturnsToLevel' (Line 30) is a counterpart of 'MoveToLevel' that only ends current records without starting any new ones.

In their on-the-wire representation, records are laid out as pairs of a field identifier followed by a field value. Nested records can be thought of as having an 'opening tag' and a 'closing tag', similar to XML (actual binary encoding may differ). A description of 'starting' a record refers to writing opening tags, while 'ending' a record refers to writing closing tags.

SECTION 5: QUERY LANGUAGE

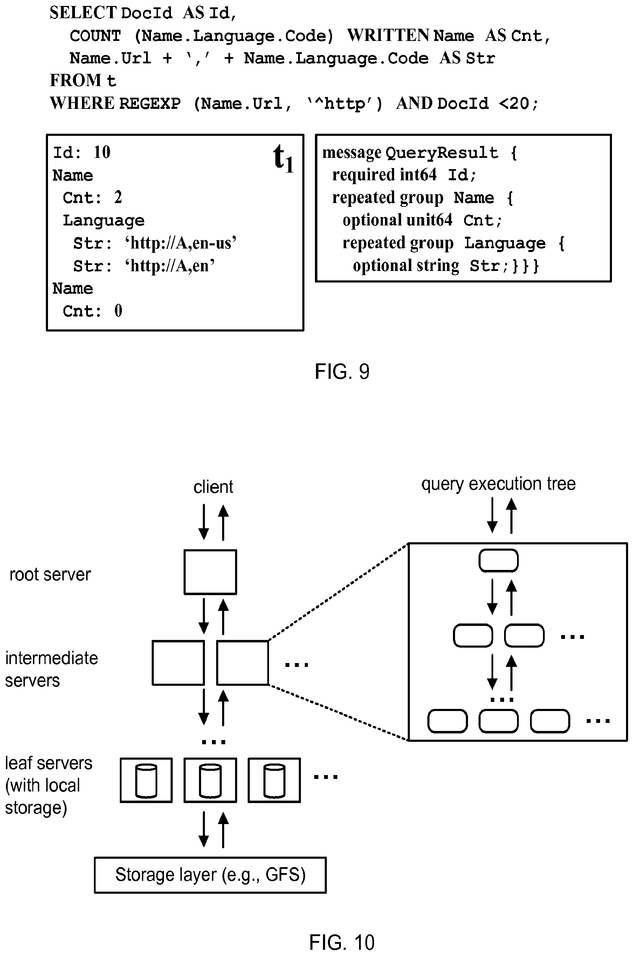

The described system may employ a query language that is based on SQL and is designed to be efficiently implementable on columnar nested storage. Aspects of the query language are described herein. Each SQL-like statement (and algebraic operators it translates to) takes as input one or multiple nested tables (e.g., a set of compressed blocks of columnar data that represents a table, as described in Section 4.1) and their schemas, and produces a nested table (e.g., a modified instance of the columnar data) and its output schema. Figure 9 depicts a sample query that performs projection, selection, and within-record aggregation. The query is evaluated over the table t = {r1, r2} from Figure 2. The fields are referenced using path expressions. The query produces a nested result although no record constructors are present in the query.

To explain what the query does, consider the selection operation (the WHERE clause). Think of a nested record as a labeled tree, where each label corresponds to a field name. The selection operator prunes away the branches of the tree that do not satisfy the specified conditions. Thus, only those nested records are retained where 'Name.Url' is defined and starts with 'http.' Next, consider projection. Each scalar expression in the SELECT clause emits a value at the same level of nesting as the most-repeated input field used in that expression. So, the string concatenation expression emits 'Str' values at the level of 'Name.Language.Code' in the input schema.

The COUNT expression illustrates within-record aggregation. The aggregation is done WITHIN each 'Name' subrecord, and emits the number of occurrences of 'Name.Language.Code' for each 'Name' as a non-negative 64-bit integer (uint64). Thus, the WITHIN statement enables intra-row aggregation. In other words, records of the same name may be aggregated in a same record or beneath a same child. In contrast, SQL, which may not be able to operate on nested data, may be unable to operate on intra-row records.

The language supports nested subqueries, inter and intra-record aggregation, top-k, joins, user-defined functions, etc. Some of these features are discussed in the experimental data section. As one additional example, the described query language includes an OMIT IF statement that can filter an intra-row group of values. For example, each of thousands of records may include several repeated 'Cost' fields that each include a numerical value. An user of the query language may want to throw out all records where a sum of the values in the fields exceeds the number '20.' Thus, the user may employ an OMIT IF statement to generate a list of the records where the summed 'Cost' in each record is twenty or less.

SECTION 6: QUERY EXECUTION

<u>Tree Architecture</u>. The described system uses a multi-level serving tree to execute queries (see Figure 10). A root server receives incoming queries, reads metadata from the tables, and routes the queries to the next level in the serving tree. The leaf servers communicate with the storage layer or access the data on local disk. Many of the queries that operate in the described system are single-scan aggregations; therefore, this document focuses on explaining those and uses them for experiments in the next section. Consider a simple aggregation query below:

```
SELECT A, COUNT(B) FROM T GROUP BY A
```

When the root server receives the above query, it determines all tablets, i.e., horizontal partitions of the table, that comprise the table 'T' and rewrites the query as follows:

$$\text{SELECT A, SUM(c) FROM } (R_1^1 \text{ UNION ALL } \dots R_n^1) \text{ GROUP BY A}$$

Tables $R_1^1$ UNION ALL ... $R_n^1$ are the results of queries sent to the nodes 1, ..., n at level 1 of the serving tree:

$$R_i^1 = \text{SELECT A, COUNT(B) AS c FROM } T_i^1 \text{ GROUP BY A}$$

$T_i^1$ is a disjoint partition of tablets in 'T' processed by server 'i' at level '1.' Each serving level performs a similar rewriting. Ultimately, the queries reach the leaves, which scan the tablets in 'T' in parallel. On the way up, intermediate servers perform a parallel aggregation of partial results. The execution model presented above is well suited for aggregation queries returning small and medium-sized results, which are a very common class of interactive queries.

<u>Query Dispatcher</u>. The described system is a multi-user system, e.g., several queries may be executed simultaneously. A query dispatcher schedules queries based on their priorities and balances the load. Another role is to provide fault tolerance when one server becomes much slower than others or a tablet replica becomes unreachable.

The amount of data processed in each query is often larger than the number of processing units available for execution, which are called slots. A slot corresponds to an execution thread on a leaf server. For example, a system of 3,000 leaf servers each using 8 threads has 24,000 slots. So, a table spanning 100,000 tablets can be processed by assigning about 5 tablets to each slot. During query execution, the query dispatcher computes a histogram of tablet processing times. If a tablet takes a disproportionately long time to process, the system reschedules the tablet on another server. Some tablets may need to be redispatched multiple times.

The leaf servers read stripes of nested data in columnar representation. The blocks in each stripe are prefetched asynchronously; the read-ahead cache typically achieves hit rates of 95%. Tablets are usually three-way replicated. When a leaf server cannot access one tablet replica, it falls over to another replica.

The query dispatcher honors a parameter that specifies the minimum percentage of tablets that must be scanned before returning a result. As described below, setting such parameter to a lower value (e.g., 98% instead of 100%) can often speed up execution significantly, especially when using smaller replication factors.

Each server may have an internal execution tree, as depicted on the right-hand side of Figure 7. The internal tree corresponds to a physical query execution plan, including evaluation of scalar expressions. Optimized, type-specific code is generated for most scalar functions. A basic execution plan consists of a set of iterators that scan input columns in lockstep and emit results of aggregates and scalar functions annotated with the correct repetition and definition levels, bypassing record assembly entirely during query execution.

Some queries by the described system, such as top-k and count-distinct, return approximate results using well-known single-scan algorithms. See Hailing Yu, Hua-gang Li, Ping Wu, Divyakant Agrawal, Amr El Abbadi, "Efficient processing of distributed top-k queries", DEXA 2005, pp. 65-74.

SECTION 7: EXPERIMENTAL DATA

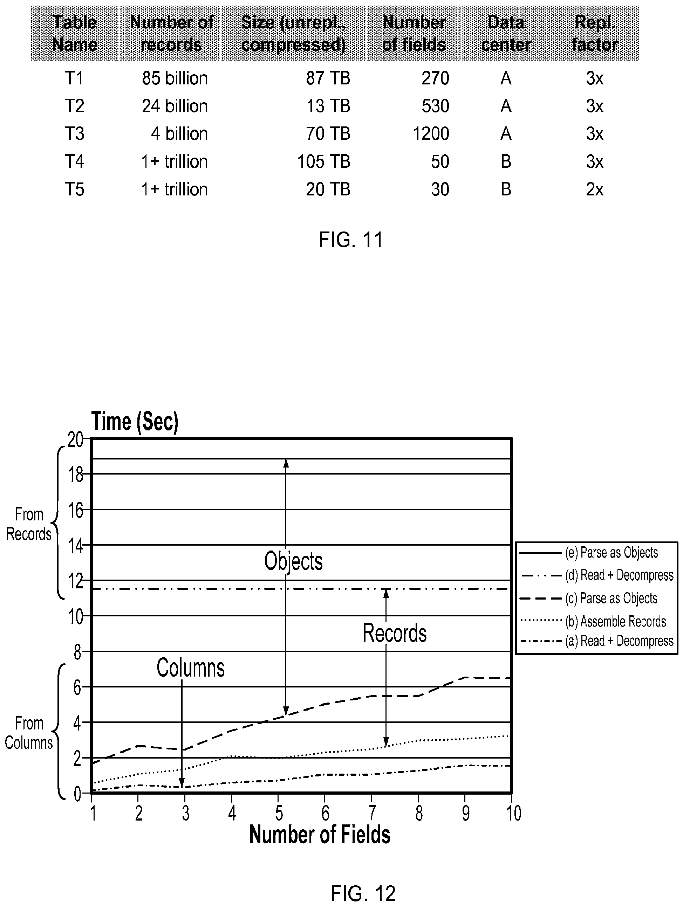

This section presents an experimental evaluation of the described system on several datasets, and examines the effectiveness of columnar storage for nested data. The properties of the datasets used in the study are summarized in Figure 11. In uncompressed, non-replicated form the datasets occupy about a petabyte of space. All tables are three-way replicated, except one two-way replicated table, and contain from 100K to 800K tablets of varying sizes. This section begins by examining the basic data access characteristics on a single machine, then show how columnar storage benefits MapReduce execution, and finally focus on the described system's performance. The experiments were conducted on system instances running in two data centers next to many other applications, during regular business operation. Table and field names used below are anonymized.

Local Disk. In the first experiment, performance tradeoffs of columnar vs. record-oriented storage were examined by scanning a 1GB fragment of table T1 containing about 300K rows (see Figure 12). The data is stored on a local disk and takes about 375MB in compressed columnar representation. The record-oriented format uses heavier compression yet yields about the same size on disk. The experiment was done on a dual-core Intel machine with a disk providing 70MB/s read bandwidth. All reported times are cold; OS cache was flushed prior to each scan.

Figure 12 shows five graphs, illustrating the time it takes to read and uncompress the data, and assemble and parse the records, for a subset of the fields. Graphs (a)-(c) outline the results for columnar storage. Each data point in these graphs was obtained by averaging the measurements over 30 runs, in each of which a set of columns of a given cardinality was chosen at random. Graph (a) shows reading and decompression time. Graph (b) adds the time needed to assemble nested records from the columns. Graph (c) shows how long it takes to parse the records into strongly typed C++ data structures.

Graphs (d)-(e) depict the time for accessing the data on record-oriented storage. Graph (d) shows reading and decompression time. A bulk of the time is spent in decompression; in fact, the compressed data can be read from the disk in about half the time. As Graph (e) indicates, parsing adds another 50% on top of reading and decompression time. These costs are paid for all fields, including the ones that are not needed.

When few columns are read, the gains of columnar representation may be about an order of magnitude. Retrieval time for columnar nested data may grow linearly with the number of fields. Record assembly and parsing may be expensive, each potentially doubling the execution time. Similar trends were observed on other datasets. A natural question to ask is where the top and bottom graphs cross, i.e., record-wise storage starts outperforming columnar storage. In experience, the crossover point may lie at dozens of fields but varies across datasets and depends on whether or not record assembly is required.

Map Reduce and the Described System. Next an execution of MapReduce and the described system are illustrated on columnar vs. record-oriented data. In this case, a single field is accessed and the performance gains are the most pronounced. Execution times for multiple columns can be extrapolated using the results of Figure 12. In this experiment, the average number of terms in a field 'txtField' of table 'T1' is counted. MapReduce execution is done using the following Sawzall program:

```
numRecs: table sum of int;
numWords: table sum of int;
emit numRecs <-1;
emit numWords <- CountWords(input.txtField);
```

The number of records is stored in the variable 'numRecs.' For each record, 'numWords' is incremented by the number of terms in 'input.txtField' returned by the 'CountWords' function. After the program runs, the average term frequency can be computed as numWords=numRecs. In SQL, this computation is expressed as:

$$Q_1: \text{SELECT SUM(CountWords(textile)) / COUNT(*) FROM T1}$$

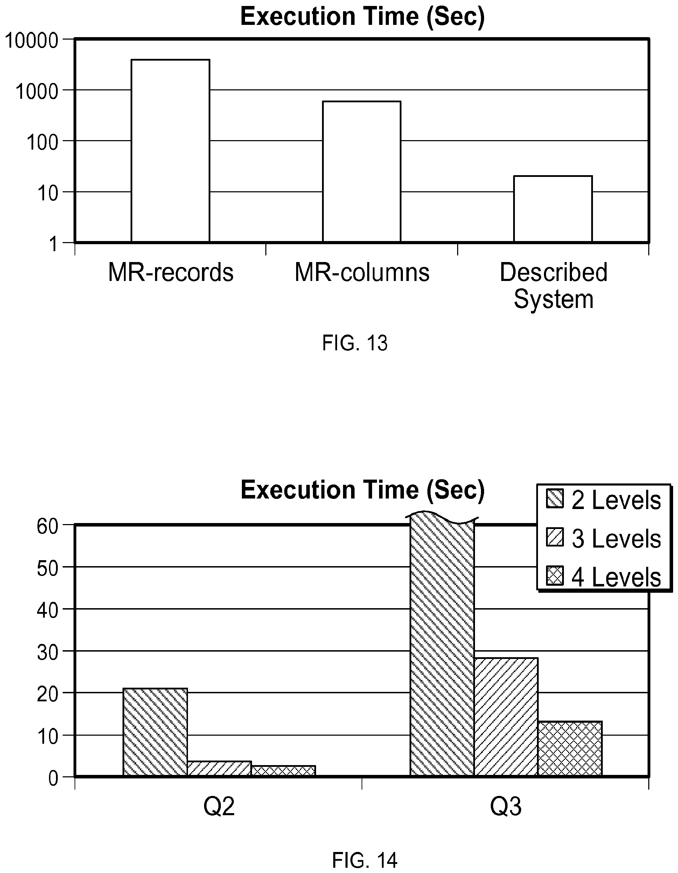

Figure 13 shows the execution times of two MapReduce jobs and the described system on a logarithmic scale. Both MapReduce jobs are run on 3000 workers (e.g., servers). Similarly, a 3000-node instance of the present system is used to execute Query $Q_1$. The described system and MapReduce-on-columns read about 0.5TB of compressed columnar data vs. 87TB read by MapReduce-on-records. As Figure 12 illustrates, MapReduce gains an order of magnitude in efficiency by switching from record-oriented to columnar storage (from hours to minutes). Another order of magnitude is achieved by using the described system (going from minutes to seconds).

<u>Serving tree topology</u>. In the next experiment, the impact of the serving tree depth on query execution times is illustrated. Two GROUP BY queries are performed on Table T2, each executed using a single scan over the data. Table T2 contains 24 billion nested records. Each record has a repeated field item containing a numeric amount. The field item.amount repeats about 40 billion times in the dataset. The first query sums up the item amount by country:

$$Q_2: \text{SELECT country, SUM(item.amount) FROM T2}$$

$$\text{GROUP BY country}$$

It returns a few hundred records and reads roughly 60GB of compressed data from disk. The next query performs a GROUP BY on a text field domain with a selection condition. It reads about 180GB and produces around 1.1 million distinct domains:

$$Q_3: \text{SELECT domain, SUM(item.amount) FROM T2}$$

$$\text{WHERE domain CONTAINS '.net'}$$

$$\text{GROUP BY domain}$$

Figure 14 shows the execution times for each query as a function of the server topology. In each topology, the number of leaf servers is kept constant at 2900 so that the same cumulative scan speed may be assumed. In the 2-level topology (1:2900), a single root server communicates directly with the leaf servers. For 3 levels, a 1:100:2900 setup is used, i.e., an extra level of 100 intermediate servers. The 4-level topology is 1:10:100:2900.

Query $Q_2$ runs in 3 seconds when 3 levels are used in the serving tree and does not benefit much from an extra level. In contrast, the execution time of $Q_3$ is halved due to increased parallelism. At 2 levels, $Q_3$ is off the chart, as the root server needed to aggregate near-sequentially the results received from thousands of nodes. This experiment illustrates how aggregations returning many groups may benefit from multi-level serving trees.

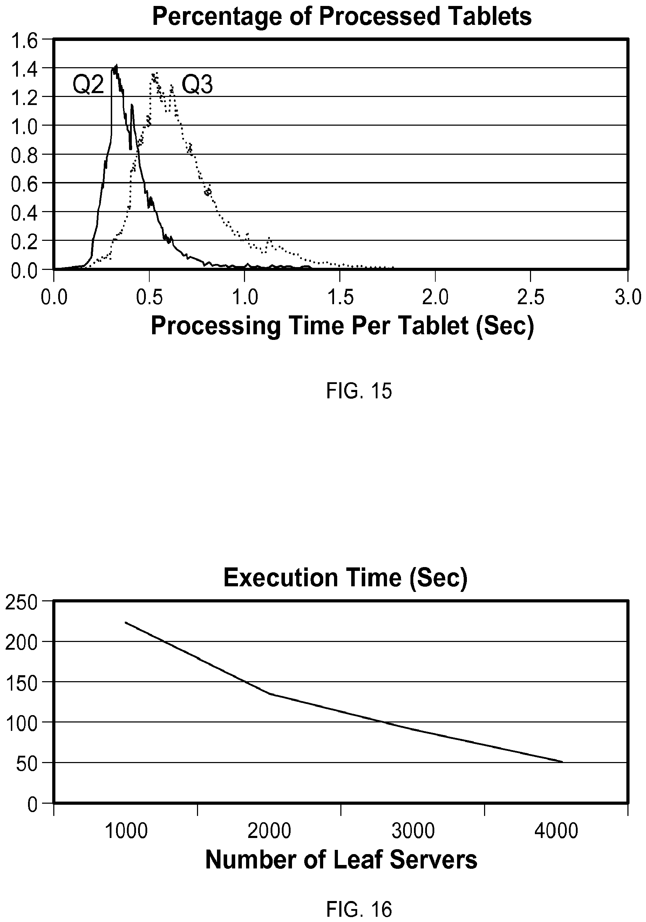

<u>Per-tablet Histograms</u>. The Figure 15 shows how fast tablets get processed by the leaf servers for a specific run of $Q_2$ and $Q_3$. The time is measured starting at the point when a tablet got scheduled for execution in an available slot, i.e., excludes the time spent waiting in the job queue. This measurement methodology factors out the effects of other queries that are executing simultaneously. The area under each histogram corresponds to 100%. As Figure 15 indicates, 99% of $Q_2$ (or $Q_3$) tablets are processed under one second (or two seconds).

<u>Within-record Aggregation</u>. As another experiment, the performance of Query $Q_4$ is examined when run on Table T3. The query illustrates within-record aggregation: it counts all records where the sum of a.b.c.d values occurring in the record are larger than the sum of a.b.p.q.r values. The fields repeat at different levels of nesting. Due to column

striking only 13GB (out of 70TB) are read from disk and the query completes in 15 seconds. Without support for nesting, running this query on T3 would be expensive.

$$Q_4 : \text{SELECT COUNT(c1 > c2) FROM}$$

$$\text{(SELECT SUM(a.b.c.d) WITHIN RECORD AS c1, SUM(a.b.p.q.r)}$$

$$\text{WITHIN} \qquad \text{RECORD AS c2 FROM T3)}$$

<u>Scalability</u>. The following experiment illustrates the scalability of the system on a trillion-record table. Query $Q_5$ shown below selects top-20 aid's and their number of occurrences in Table T4. The query scans 4.2TB of compressed data.

$$Q_5: \text{SELECT TOP(aid, 20), COUNT(*) FROM T4}$$

$$\text{WHERE bid = \{value1\} AND cid = \{value2\}}$$

The query was executed using four configurations of the system, ranging from 1000 to 4000 nodes. The execution times are in Figure 16. In each run, the total expended CPU time is nearly identical, at about 300K seconds, whereas the user-perceived time decreases near-linearly with the growing size of the system. This result suggests that a larger system can be just as effective in terms of resource usage as a smaller one, yet allows faster execution.

<u>Stragglers</u>. Stragglers may be tasks (e.g., processing a tablet) that are not performed, for example, because the machine performing the task has an operational problem or the machine is not being aggressive enough in handling the task given higher-priority tasks. Query $Q_6$ below is run on a trillion-row table T5. In contrast to the other datasets, T5 is two-way replicated. Hence, the likelihood of stragglers slowing the execution is higher since there are fewer opportunities to reschedule the work.

$$Q_6: \text{SELECT COUNT(DISTINCT a) FROM T5}$$

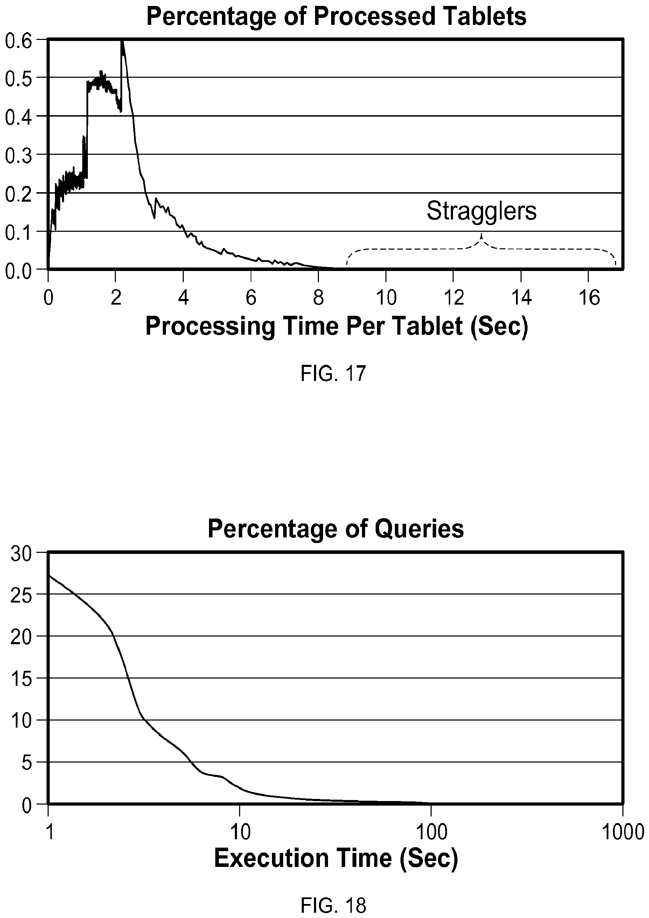

Query $Q_6$ reads over 1TB of compressed data. The compression ratio for the retrieved field is about 10. As indicated in Figure 17, the processing time for 99% of the tablets is below 5 seconds per tablet per slot. However, a small fraction of the tablets take a lot longer, slowing down the query response time from less than a minute to several minutes, when executed on a 2500 node system. The next section summarizes experimental findings.

SECTION 8: OBSERVATIONS

Figure 18 shows the query response time distribution in a typical monthly workload of the described system, on a logarithmic scale. As Figure 18 indicates, most queries are processed under 10 seconds, well within the interactive range. Some queries have achieved a scan throughput close to 100 billion records per second in a busy cluster, and even higher on dedicated machines. The experimental data presented above suggests the following observations:

- Scan-based queries can be executed at interactive speeds on disk-resident datasets of numerous records;
- Near-linear scalability in the number of columns and servers may be achievable for systems containing thousands of nodes;
- MapReduce can benefit from columnar storage just like a DBMS;
- Record assembly and parsing are expensive. Software layers (beyond the query processing layer) may be optimized to directly consume column-oriented data;
- MapReduce and query processing can be used in a complementary fashion, one layer's output can feed another's input;
- In a multi-user environment, a larger system can benefit from economies of scale while offering a qualitatively better user experience;
- If trading speed against accuracy is acceptable, a query can be terminated much earlier and yet see most of the data; and

- The bulk of a web-scale dataset can be scanned fast, although getting to the last few percent may increase the amount of processing time.

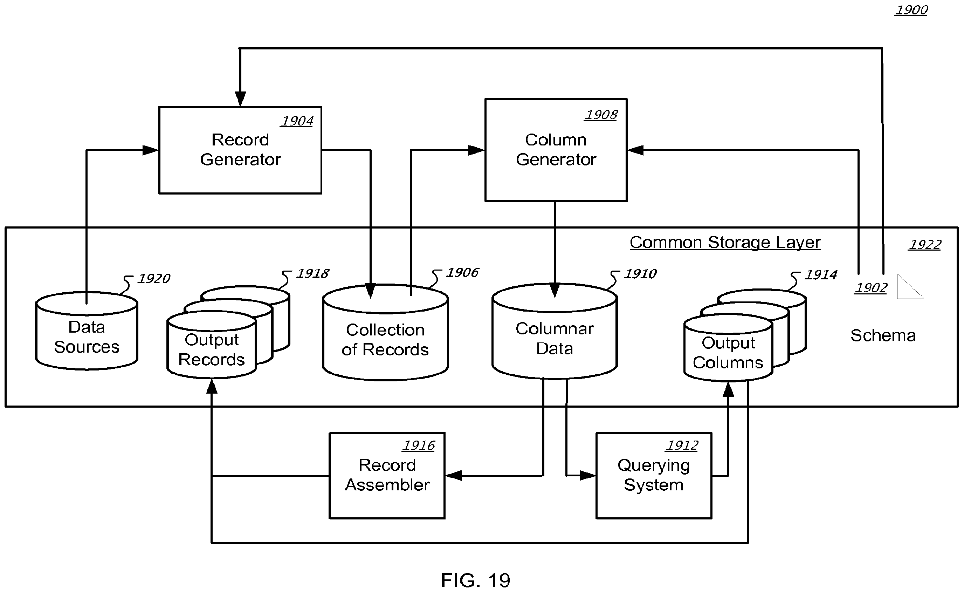

Figure 19 is a block diagram of a system for generating and processing columnar storage representations of nested records. The record generator 1904 generates records of nested data from data sources 1920 and a schema 1902. The column generator 1908 receives as input the records 1906 and the schema 1902 and outputs column stripes that represent the data in the records 1906, but in a columnar format. The columnar data 1910 may be queried *in situ* by the querying system 1912 in order to produce different sets of output columns 1914. The columnar data 1910 may also be assembled back into record form by the record assembler 1916. The records 1918 that are output by the record assembler may each include a sub-set of fields from the original records in the collection 1906. The output records 1918 may be operated on by a record-based data analysis program (e.g., MapReduce).

More specifically, the data sources 1920 may include substantially unstructured data. Substantially unstructured indicates that the data may include elements that denote structure, but the entire spectrum of information may not be similarly structured. As an illustration, the data sources 1920 may include the source code for each of millions of websites. Although each website includes some degree of structure, the content of each website is not generated based on a common schema. Standards may generally govern a format of the site, but content and placement of fields is not specified among each and every website by a single schema. In some examples, the information in data sources 1920 is not stored in the common storage layer 1922, but is pulled directly from external sources on the internet.

The schema 1902 defines a common structuring for information that may be contained in the data sources. As described earlier in this document, the schema 1902 can require certain fields of information and may permit other fields of information to be stored as optional.

The record generator 1904 receives as input the schema 1902 and information from the data sources 1920. The record generator 1904 takes the information from the data sources 1920 and structures all or portions of the information into individual instances of records that comply with the schema 1902. For example, while the data sources 1920 may include substantially unstructured data from web pages, the record generator 1904 may select pieces of information from each web page to include for particular records 1906.

Thus, each of the records 1906 may include data that is structured according to the schema 1902. The structured data may include fields, which may denote a semantics of data values and a structural relationship of the data values. Accordingly, the schema may be referenced to obtain additional definition information for the data value (e.g., what the digitally stored data value represents in the real world or on a web page and relationships to other values).

Each record 1906 may include nested fields and data values. A nested record may include more than one field of the same name or path. The fields with the same name or path, however, can be structurally located in different locations in a particular record. For example, a single field that is defined by the schema may be able to repeat multiple times. Further, fields may have children fields (i.e., nested fields). Thus, at a top level of a record a particular field may repeat, and each repetition of the field may or may not include a particular child field. In other words, the record may include instances of the child field in some portions of the record, but not in other portions of the records.

The collection of records 1906 may be translated into columnar data 1910 to speed up processing of information in the records. For example, if the amount of records in the collection 1906 numbers in the billions, and each record could include hundreds of different fields, an analysis of the records may be time-intensive where information on a small number of fields is desired. This is because each record in the collection 1906 is stored with other information from the record. That is, each record is grouped together in a consecutive portion of memory (e.g., as illustrated in the 'record-oriented' depiction of nested data in Figure 1).

In contrast, columnar data 1910 includes columns that each store information for a single field in the schema 1902 (e.g., as illustrated in the 'column-oriented' depiction of nested data in Figure 1). Thus, if the field is a byte long, the column for the field may be on the order of billions of bytes (e.g., one byte for each record) as opposed to billions of records (e.g., where each record may be a megabyte in size). The operations of the column generator 1908 are described in more detail in Section 4.2 "Splitting Records into Columns." The storage format for the columnar data 1910 is described in more detail in Section 4.1 "Repetition and Definition Levels."

The columnar data 1910 may be queried directly using the querying system 1912. In other words, the columnar data 1910 may be queried without loading the data into a database. The querying system, when executing a query, may receive as an input a table of columnar data. In some examples, the querying system also receives as input the schema 1902. The columnar stripes may be stored together with the schema to make the data self-describing. The querying system allows operations to be performed on the columnar data in order to generate columns of output information 1914. The output columns 1914 may include a subset of the values represented in the columnar data 1910, as determined by a particular query. In some examples, the querying system outputs records 1918 instead of, or in addition to, the columns 1914.

For example, the querying system 1912 may receive a first query and, in response, may parse through select columns of data and generate a set of output columns that provides a title of all web pages that have one or more videos and a number of the videos for each web page. The querying system may receive a second query and in response output a second set of output columns that provides a URL of every web page that was generated within the last fifteen minutes. Other information from the columns 1910 may not be included in a set of output columns that corresponds to a particular query 1914.

Data that is stored as columnar data 1910 may need to be accessed by an analytical service that does not operate on columnar data but operates on records. Thus, the record assembler 1916 may receive as input the columnar data and assemble records from the columnar data. The process of assembling records is described in more detail in Section 4.3 "Record Assembly."

Although the records may already be available in the collection 1906, the record assembler 1916 enables generating a set of records that includes a subset of the fields of the records in the collection 1906. For example, the records in the collection may include thousands of different fields. A user may want to run a record-oriented analysis program that only requires knowledge from two of the fields, but for all of the records. Thus, the record assembler 1916 may generate a set of records that only includes information on the requested fields. This way, multiple sets of output records 1918 can be developed for different analysis or for different analysis programs. An analysis on smaller records may be faster than an analysis that must traverse the larger records that may be found in collection 1906.

The above description of the operation of the system 1900 illustrates an example where the collection of records 1906 includes records that are formatted in accordance with the schema 1902, and where the columnar data 1910 is generated from this single set of similarly-structured data. In various examples, multiple schemas 1902 may be used to generate a collection of records that includes many sets of differently structured records 1906. Each record, however, may identify in a header the type of schema that was used in the record's generation. Similarly, a column stripe may be generated for each field in each of many sets of similarly-structured records. Each column stripe may indicate not only the name of the field, but also the schema from which the columnar data is associated (i.e., the schema used to format the records from which the columnar data was generated).

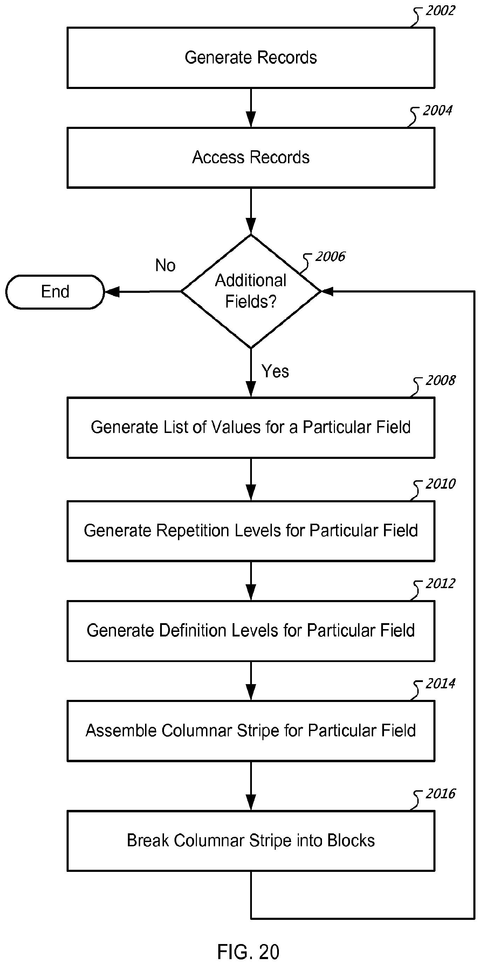

Figure 20 is a flow chart of an example process for generating columnar data. The process may be performed by components of the system 1900.

In box 2002, a set of records is generated. The generation of the records may be performed by the record generator 1904. Unstructured data (e.g., from data sources 1920) may be compiled into a standardized record format that is defined by schema 1902. The records may be stored in the collection 1906.

In box 2004, the records in the collection 1906 are accessed. For example, the column generator 1908 receives as input the data from the collection of records 1906.

In box 2006, a determination is made whether a column stripe is to be generated for an additional field. For example, a stripe is to be generated for each field in the set of records that are stored in the collection 1906 (and thus each record in the schema 1902 or a subset thereof). In this illustration, no stripes have been made so far, and thus there are fields for which a stripe is to be generated. Accordingly, the process proceeds to box 2008 in order to perform operations for a particular field. If all stripes had been generated (e.g., a stripe had been generated for every field in the collection of records 1906), the process may end.

In box 2008, a list of values for the particular is generated. For example, each of the records may be traversed and a list of values for the particular field is generated.

In box 2010, repetition levels for the particular field are generated. For example, the column generator 1908 may determine a repetition level for each of the values in the list by determining a most recently repeated field in the path for the field.

In box 2012, definition levels for the particular field are generated. For example, the column generator 1908 may determine a definition level for each value (including values that are 'missing,' as described in more detail above).

In box 2014, a columnar stripe is assembled for the particular field. In various examples, the repetition and definition levels are placed in paired groupings in the header of the stripe. The list of values may be placed in the body of the stripe.

In box 2016, the columnar stripe is broken into blocks that may be compressed. Each block may include a set of values and their corresponding repetition and definition levels. Subsequently, a determination in box 2006 of whether columnar stripes are to be generated for additional fields is performed. If no additional columnar stripes are to be generated, the process ends.

The process depicted in Figure 20 is an example process for generating columnar stripes. Variations on the process are contemplated. For example, the operations of the boxes may not be performed sequentially as depicted in the flowchart. Stripes for multiple fields may be generated at a single time. The repetition level and definition level may be generated as each value is obtained from a record. The columnar stripe may not be generated as a whole. Instead, each block may be generated from the stripe and independently compressed. Thus, the flowchart may represent a conceptual mechanism for understanding the generation of stripes, but is not intended to be limiting. A process for generating columnar data is depicted in the algorithm of Figure 4, which may not correspond to the operations described in relation to Figure 20.

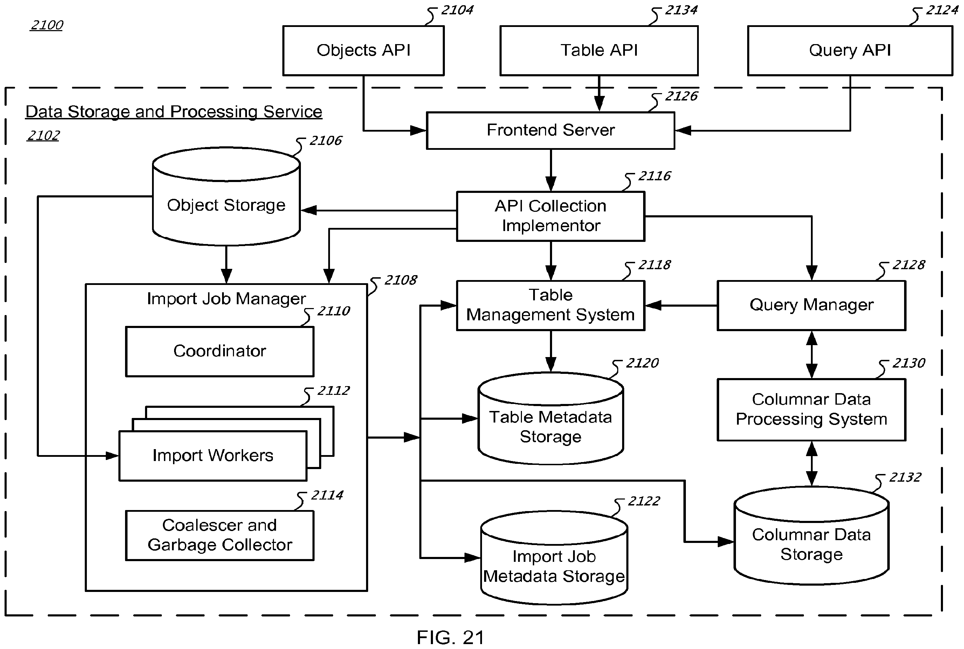

Figure 21 is a block diagram illustrating an example of a system 2100 that implements a web service for data storage and processing. In general, the columnar data processing system 2130 in the lower-right side of Figure 21 represents components of the system illustrated in Figure 19 (which illustrates a block diagram of a system for generating and processing columnar storage representations of nested records). As described in more detail throughout this document, the columnar data processing system 2130 may execute efficient queries on columnar data that is stored in repository 2132. The remaining components of the data storage and processing service 2102 support a web service that stores data, allows external users (e.g., individuals accessing the service 2102 over the internet) to import that data into tables, and, from the user's perspective, perform queries over those tables. The data underlying those tables may be stored as columnar data and the queries over the tables may be implemented by the querying capabilities of the columnar data processing system 2130. These external users use Application Programming Interfaces (API) 2104, 2134, and 2124 to upload data to the data storage and processing service 2102, import select portions of the uploaded data into tables, and perform queries on the tables.

External users may use the Objects API 2104 to upload data into the object storage 2106, potentially aggregating in a single service data that streams regularly from many computing devices. External users may define tables and transfer the data that is located in the object storage 2106 to the tables. The transfer can be performed upon user request or automatically by the service 2102 as new data is uploaded to the object storage 2106. The bulk data that is referenced in tables may be stored as columnar data in storage 2132, while the metadata for the tables may be stored separately in the table metadata storage 2120. The external users may run efficient queries on the tables using the Query API 2124. The queries on the tables may be implemented as queries on the underlying columnar data in storage 2132, and the processing of the queries on the columnar data in storage 2132 may be performed by the columnar data processing system 2130, as described throughout this document.

The object storage 2106 that is provided to external users through the Objects API 2104 is described in detail first. The object storage 2106 hosts data that may be accessible through the Objects API 2104 to numerous external users. As an illustration, more and more log data that is generated by websites is being hosted in the cloud by remote services that specialize in data hosting, as opposed to the websites themselves storing the log files on their own networks. Such cloud-based storage may be particularly beneficial when data that is continuously generated by many geographically dispersed computers needs to be aggregated in one place, available to multiple different users, and occasionally analyzed.

The object storage 2106 may include objects from a variety of users that are grouped into buckets. Each bucket may be a flat container that groups objects and provides a unique namespace for the group of objects. An external user may own a collection of buckets and assign access settings to each bucket. Thus, objects in one bucket may be private to a few users while objects in another bucket may be publicly accessible on the internet. The buckets may have a universally unique name among all buckets owned by external users. In some examples, the buckets exist in a flat namespace such that the buckets are not nestable.

Each object may be stored as an opaque collection of bytes. In other words, the object storage 2106 may receive through the Objects API 2104 different types of data, but may treat the received data as a chunk of data without regard to the format of the data. Each object may have corresponding metadata that is stored in a separate table or database. Each object may be assigned to one bucket, and each object in a bucket may have a name that is unique to the bucket. Thus each object may have a globally unique name when addressed with reference to the object's parent bucket. Like buckets, each object may have its own access control list, enabling sharing data over a network (e.g., the internet) between a variety of users with different permissions.

The interface provided by the Objects API 2104 to exchange data may be a RESTful (REpresentational State Transfer) HTTP interface that employs industry standard, or proprietary, protocols. For example, external users may employ GET, PUT, POST, HEAD, and DELETE actions to interact with objects that are stored in the object storage 2106. The Objects API 2104 provides a sequential interface for writing and reading data to objects in the object storage 2106. In some examples, the Objects API 2104 provides read-only access to some of the objects. Thus, a user may delete and replace objects, but may not incrementally modify objects. In some examples, the data storage and processing service 2102 may not be configured for external customers to perform SQL-like queries on the objects directly. The data in the objects may be first placed into structured tables before such queries are performed.

As an illustration, HTTP API requests may be received at the frontend server 2126 from a remote computerized device that is associated with an external user. The frontend server 2126 forwards the request to an API collection implementor 2126. The API collection implementor stores API libraries, processes the request based on the stored libraries, and generates corresponding requests to the appropriate components of the data storage and processing service 2102. Because API requests for the objects API 2104 pertain to object storage 2106, the API collection implementor 2116 forwards a request to the object storage 2106.

The data storage and processing service 2102 provides the ability to transfer data that is stored in objects into tables and run efficient queries on the tables using the columnar data processing system 2130. For example, users can append data to tables, create new tables, and manage sharing permissions for tables. The data in the tables may be stored as columnar data in the columnar data storage 2132. Accordingly, when data is placed in a table, the data storage and processing service 2102 transfers data from the object storage 2106 to the columnar data storage 2132. The import job manager 2108 manages the process of transferring the data and performs conversion operations on the data.

Each table represents a structured data set that a user may query through the Query API 2124. Users can create tables, import data into tables, share tables, run queries over the tables, and use the tables in data analysis pipelines. The external user exposure to a table may be an object that is stored in the object storage 2106 as a delegate object. A delegate object may be an object that provides an interface to a set of data and operations that are not stored in the object storage 2106. In other words, delegate objects may allow tables to be mapped into the namespace for the object storage 2106. Thus, each table's name may reside in the global object namespace and may be unique. A delegate object for a table may hold metadata that identifies the owner of the table, the access control list for the table, and the table identifier (which links the delegate object to additional table metadata, and is described in more detail below).

Thus, in one implementation, an external user sees tables as objects residing within buckets. The user may view a list of all tables in a bucket and may delete a table by deleting the corresponding delegate object, much in the same way that the user may view a list of objects and delete objects. When an external user makes a request that references a table via its object name, a reference to underlying table data is extracted from the delegate object and is used to service the request. For example, a delete operation on a table may trigger cleanup operations on the corresponding metadata in the table metadata storage 2120 and underlying columnar data in the columnar data storage 2132.

A table is created in response to a request through the Table API 2134. The table management system 2118 may create a table at a key of a database in the table metadata storage 2120, and then create a delegate object in the object storage 2106 to reference the key. The table metadata storage 2120 may hold metadata for the tables that are referenced by delegate objects. For example, a table identifier in a delegate object references a key in a row of the table metadata storage 2120. The table metadata storage 2120 stores, for the table and under the key, any combination of: (1) the table identifier, (2) a table revision number, (3) a table name, (4) a data reference set, (5) a schema description, and (6) data statistics.

The table name may be a back pointer to one or more buckets and objects that the table is associated with. Storing the table name may facilitate garbage collection and help avoid conflicts if the table is deleted and a new table with the same external (object) name is later created. The data reference set may include path references to the columnar data 2132 that backs the table (e.g., that stores the bulk data for the tables). The schema description may allow for efficient schema validation during data management operations. The data statistics may identify information about the table, for example, a number of rows, a size of data referenced by the table, and a last updated timestamp.

In some examples, a table is filled with data from objects in the object storage 2106 in response to a demand by a user (e.g., a Table API call). For example, the import job manager 2108 may receive an ad-hoc request from a data owner to import the data from a set of objects from the data storage 2106 into a table. In other examples, a data owner may generate a job that is executed by the import job manager 2108, and that establishes a continuous import service that takes objects that are newly placed in a bucket and "auto-imports" the data in the objects into a table. After the data from the objects is imported into the table, the objects may be automatically deleted without user input.

The import job manager 2108 receives requests to import data from an object into a table, and in response performs several operations to transfer data to the columnar data storage 2132. The job manager 2108 creates job metadata to track the import and launches a coordinator 2110. The job metadata is stored in the import job metadata storage 2122.

In particular, the import job manager 2118 may aggregate the content of objects, perform data format transformations, shard the data into appropriately sized chunks, move the data into a different storage layer, and place the chucks of data in the columnar data storage 2132 for access by the columnar data processing system 2130. In some examples, the import job manager 2108 transforms the object data into columnar data. In other examples, the import job manager 2108 places non-columnar chunks of data in the columnar data storage 2132, and the columnar data processing system 2130 converts the non-columnar chunks of data to a columnar format.

The coordinator 2110 is invoked by the import job manager 2108 to analyze an import job and launch an appropriate number of workers to process the data in a reasonable amount of time. The coordinator 2110 analyzes the input data objects and decides how to assign the data objects among individual workers 2112 that process the input data objects. The coordinator 2110 spawns individual worker instances and observes worker progress. The coordinator 2110 ensures that the data handled by each worker is not too small or large.

In some circumstances, use of a single coordinator and many workers may enable the import job manager 2110 to scale with data size and a number of input data objects. If a failure is detected or a worker is inefficient, the worker may be restarted or the worker's tasks may be reassigned. Each worker instance 2112 may sequentially read input data objects, perform appropriate format conversions, and store the data in sharded bundles of columnar data 2132. In some examples, worker instances are assigned to run in the same clusters where the input data is located (because cross-datacenter traffic can be inefficient and expensive).

The workers convert data from a given set of inputs into a sharded set of columnar data bundles, and appends the bundles to the appropriate table. Input data may be any schematized data format that the system understands. Input data may be text or binary form, and the schema may be incorporated in the data format or specified along with the data. Example input data may be: (1) a record data type (a self-contained and self-describing structure for record-stored data), (2) a column data type (a self-contained and self-describing structure for column-stored data), (3) text based formats for which the data storage and processing service 2102 knows the schema (field separated or fixed field length formats such as Apache, AppEngine, or W3C logs), or (4) text based formats that can be described by name/type value pairs (field separated or fixed field length, and the user specifies the name/type pairs and separators or field sizes).

The coalescer and garbage collector 2114 may periodically scan tables for issues to fix. The coalescer may monitor contents of the columnar data storage 2132 and detect columnar data bundles that are too small and may be coalesced into larger bundles. The garbage collector detects columnar data bundles that are not referenced by any tables and may be deleted. Similarly, dangling table metadata may be cleaned up, for example, when a table is generated but the table creation process fails before a corresponding delegate object is generated in the object storage 2106.

Once a table has been created and data has been imported into the table (e.g., by generating table metadata, generating the delegate object in the data storage 2106, and generating corresponding columnar data 2132), user queries may be run on the tables. The queries may be SQL-like and may be received from external users through the Query API 2124. The frontend server 2126 receives the Query API requests and forwards the requests to the API collection implementor 2116, which passes the queries to the query manager 2128.

The query manager 2128 takes SQL-like queries and an authenticated token for the external user, verifies that the external user can access the tables referenced in the query, and hands the request off to the columnar data processing system 2130 and table management system 2118 for executing the query. As described earlier in the document, the columnar data processing system 2130 may query columnar data 2132 and output result data (e.g., columns of result data). The result data may be placed in a table defined by the query, returned to the external user in a format defined by data format templates, or placed in an object defined in the API call.

The API collection implementor 2116 handles API calls through the Objects API 2104, Table API 2134, and the Query API 2124. Example API functions are detailed below.

Objects API

ObjectStorage.DeleteObject(string object): Delete an object or a table (e.g., by causing the delegate object to invoke operations for removing the table).

ObjectStorage.ListObjects(string bucket): Lists the objects and tables in a bucket. Objects may include a tag that allows the objects to be labeled as tables or other types of data. Thus, the described ListObjects API function may include an optional parameter that identifies the types of objects to list within a bucket.

ObjectStorage.PutObject(string object): Pushes data from an external user's computerized device to the object storage 2106.

ObjectStorage.GetObject(string object): Returns to an external user's computerized device an object from the object storage 2106. When run on a tableName, the GetObject API call may return: (1) the equivalent of a "select * from tableName" statement; (2) a description of the contents of the table, the table references, and the records added to the table; or (3) metadata about the table.

Table API

CreateTable(string bucket, string tableName, ACLs): Creates tables in object storage 2106 with the specified name tableName, with optional access control lists applied to the table.

ImportRecords (string sourceBucket, string sourceObject, string dataFormat, string destBucket, string destTableName, ImportToken importToken, Boolean extendSchema=true): Initiates an asynchronous import of data into destTableName using dataFormat to determine how to read the content of sourceObject. If extendSchema is true, then the schema of the destTableName is extended to support all data imported. If extendSchema is false, then objects that include data records that do not match destTableName's existing schema, or the data records themselves, are ignored. ImportToken stores a pointer to the import job initiated by a call using the ImportRecords function.

GetImportStatus(ImportToken importToken): Returns the status of the import call associated with importToken. The returned status may state if the import is complete or in-progress, state a number of records imported, and state number of records with errors.

CreateContinuousImportService(Bucket sourceBucket, FormatDescription sourceFormat, Object destinationTable, Object importServiceName): Starts an import task that watches sourceBucket for new objects. When the new objects are loaded into the sourceBucket (e.g., by external users), the task imports the data in the objects to destinationTable. The service sourceFormat attribute identifies the format of the objects in the sourceBucket. The import service has a name in the objects' namespace, providing external users the ability to list, delete, and perform authorization operations on import services.

GetContinuousImportServiceStatus(Object importServiceName): Returns information describing if the import-ServiceName is complete or in progress. May also return any recent errors.

Query API

Query(String sqlQuery, ExportEnum exportAs): Executes a query sqlQuery and returns data in the format specified by exportAs. The format of the returned data may be csv, xml, json, and viz. In some examples, GViz SQL and Pig Latin may be used instead of SQL. The exportAs field may be optional if query sqlQuery defines a table to output the data to.

Query(String sqlQuery, ExportEnum exportAs, Object exportToObject): Stores the results of query sqlQuery in object exportToObject.

The collection of APIs may enable SQL-like summaries to be performed on large quantities of data that is imported into tables from the object storage 2106. The source objects in object storage 2106 may be aggregated from numerous web sources, each source having permission to place data in the same bucket of object storage 2106. Thus, the illustrated data storage and processing service 2102 can provide an aggregation and data import pipeline for the columnar data processing system 2130 described earlier in this document. The columnar data processing system 2130 can provide fast queries and aggregations of large datasets.

In addition to the SQL-like operations described earlier in this document, an external user may JOIN data in tables. Because the described columnar data processing system 2130 may be organized as a tree of serving shards, in which each shard communicates with its children and its parent, introducing a general JOIN may require adding a capability of communication between all pairs of leaf shards. The JOIN (local) function, which may work on input tables particular to a leaf, may work globally by first issuing a SHUFFLE command.

The SHUFFLE command ensures that tuples which should be joined are on the same shard. For example, a JOIN operation R JOIN S ON R.f1 = S.f2 can be expressed by first shuffling R by f1 and S by f2. The semantics of the shuffle operation then guarantee that all tuples of R with a given value for f1 will be on one tablet, and all tuples of S which have the same value for f2 will be on a corresponding tablet. Thus, after the shuffles, a JOIN (local) may have the same effect as a global join.

In various examples, the data that is stored by the data storage and processing service 2102 is replicated among geographically dispersed server devices. For example, an object that is stored in object storage 2106 may be replicated among server devices in data centers that are hundreds of kilometers apart. Thus, a localized server failure, power outage, or natural disaster may not influence the availability of the object. Similarly, after the data in the object has been imported into a table, the columnar stripes that underlie the table and that reside in the columnar data storage 2132 may be replicated among geographically dispersed server devices. The table metadata that is stored in the table metadata storage 2120 may also be replicated among geographically dispersed server devices.

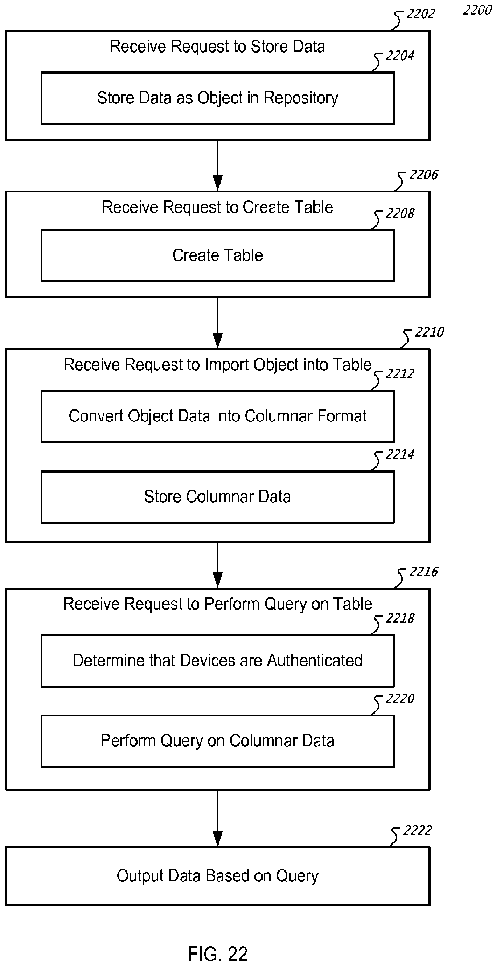

Figure 22 is a flowchart showing an example of a process 2200 for performing data storage and processing. The process 2200 may be performed by the system illustrated in Figure 21, and more particularly the data storage and processing service 2102.

In box 2202, a request to store data is received at a server system. For example, a server system that provides the data storage and processing service 2102 may implement an API that enables remote computing devices to upload data to the server system, for example, over the internet. The server system may receive a function call to upload data through the API and from a remote computing device. The function call may identify data to upload and a name for the data. The name for the data may identify a storage location for data (e.g., a bucket).

In some examples, the request may be received from a computing device that does not access the data storage and processing service 2102 over the internet. For example, a third party may physically ship one or more physical storage devices (e.g., CDs, DVDs, hard discs, or RAID enclosures) to a business entity that operates the data storage and processing service 2102. Employees of the business entity may load the data that is included in the physical storage device into the object storage 2106 using a computing device that is connected to the data storage and processing service 2102 over a local network. The local transfer of data to the object storage 2106 may not use the API.

In box 2204, the identified data is stored as an object in a repository at the server system. The repository may include a collection of "buckets" that are each configured to include one or more objects. Each bucket may have a name that is unique among the collection of buckets, and the objects in each bucket may have names that are unique to the bucket. Thus, each object may be addressable by a unique name path (e.g., bucketName.objectName). Each bucket may be owned by one or more external customers.

Storing the data (e.g., a record, collection of records, file, or collection of files) as an object may include determining that the remote device that is uploading the data is authorized to place objects in the identified bucket. For example, an external customer may create a bucket and assign specific user accounts as authorized to place data in the bucket and view the contents of the bucket. If a remote device logged in under one of the specific accounts requests to place data in the bucket, the request may be granted. Similar requests by non-authorized user accounts may be rejected.

In box 2206, a request is received to create a table. For example, the data storage and processing service 2102 may receive from a remote computing device an API function call requesting to create a table. A table may be a structured data set that a user may query. The request may define a name for the table, and define the fields for the table. For example, the request may include a schema that defines a structure for a type of record, and the table may be generated to store data for records of the type.

In box 2208, the table is created. For example, metadata for the table may be added under a row in a database. A delegate object that references the table row may be placed in the object repository. For example, if the API call requests to generate a table named bucketName.TableName, a delegate object that is named TableName may be placed in the bucket bucketName. The TableName delegate object may include an access control list for the table and a table identifier (e.g., an identifier of the database row that stores metadata for the table).

In box 2210, a request to import data in the object into the table is received. For example, the data storage and processing service 2102 may receive from a remote computing device an API function call requesting that data in the object be loaded into the table or appended to the end of a table that already includes data. In some examples, the request is received from a continuous import service. The continuous import service may periodically monitor a bucket and when the bucket includes new objects (e.g., when external customers place new objects in the bucket) the continuous import service requests that data in the new objects be appended to the table. In some examples, an API function call that establishes the continuous import service was received earlier. The customer-facing view of the continuous import service may be a delegate object.

In box 2212, the data in the object is converted into columnar format. For example, the object may include a set of records, and the records may be converted into a set of columnar stripes, where each stripe (or set of blocks of a stripe) describes a single attribute field of the records. The columnar stripes may include the repetition and definition levels described throughout this document.

In box 2214, the columnar data is stored in a repository. In some examples, the repository for the columnar data is different than the repository for the objects. For example, the repositories may be different storage layers implemented at a server system implementing the data storage and processing service 2102. Metadata that references the columnar data may be stored in the table database. Thus, a query of the table may include referencing the metadata in the table database to identify columnar data that corresponds to particular attribute fields for the data in the table.

In some examples, the request identifies several objects for which data is to be loaded into the table. The data content of the objects may be aggregated, data format transformations may be performed, the data may be sharded into appropriately sized chunks of columnar data, and the chucks of columnar data may be placed in the repository for columnar data.

In box 2216, a request is received to perform a query on the table. For example, the data storage and processing service 2102 may receive an API function call from a remote computing device requesting that a SQL-like query be run on the table. In some examples, the query operates on the table and one or more other tables. For example, the query may collect data having particular characteristics from each of two tables and place the aggregated data in a third table.

In box 2218, a determination is made whether the remote computing device requesting the query is authenticated to access the one or more tables specified in the query. For example, the delegate object for each table may have an access control list that identifies user accounts that may run queries on the table corresponding to the delegate object, delete the table, and add data to the table. If a remote computing device associated with a user account attempts to run a query on several tables, the data storage and processing service 2102 determines if the user account is authorized to query each of the tables.

In box 2220, a query is performed on columnar data. For example, queries are performed on the columnar data underlying the tables specified in the query request. A query manager 2128 may generate, based on the query received from the remote computing device, component queries that are performed on particular columns of data for the tables specified by the query. For example, the query may request data within a particular range for a single attribute in a table. The query manager 2128 may generate a component query on a collection of blocks of a columnar stripe that is associated with the single attribute, and may run other component queries on columnar stripes for other of the attributes in the query.

In box 2222, data is output based on the query. For example, the query may identify a table that the results of the query are to be placed in. Accordingly, the query manager 2128, table management system 2118, and columnar data processing system 2130 may place the result data in a table. Also, the query may identify one or more objects in which to place the results of the query. Thus, the results of the query may be placed in one or more objects in the object storage 2106. The API call requesting that the data be placed in the object may specify a data format for storage of the data in the object. Accordingly, outputting the data as one or more objects may include converting output columns of columnar data stored in the columnar data storage 2132 into a different type of data format for storage in the object storage 2106 (e.g., a record-based type of data format).

In some examples, the schema may be extensible. In other words, a third party may request minor changes to the schema (e.g., by editing the schema through an API or uploading a new schema that includes minor changes). The minor changes can include adding new optional fields to the schema. In some examples, however, the user may not be able to add new required fields or remove existing required fields from the schema. The schema may be updated without rebuilding or regenerating the entire data set. As such, a new columnar stripe may be added for a newly added optional field without modification of the existing columnar stripes.

In some examples, a third party user may be able to change field names and add aliases for field names. For example, a schema may include a field that is named "Time." A third party user may decide to change the name of the field to "LocalTime." As such, newly submitted data records may include "LocalTime" fields, while data records that are already stored by the data storage and processing service 2102 may include "Time" fields. The data storage and processing service 2102 may recognize the fields "Time" and "Local Time" as aliases of each other. As an example, the data storage and processing service 2102 may store an index that matches field names to a unique identifier for a data element. The index may associate both the "Time" and "Local Time" aliases to a unique identifier for a field (e.g., the identifier "1A452BC"). As such, the unique identifier may be associated with and designate a single columnar stripe that all the data values for the "Time" and "Local Time" fields. In some examples, the data records stored in the object storage 2106 also identify fields with unique identifiers and do not identify fields with names that can change.

Also, the data may be directly output to the remote computing device, additionally or instead of placing the data in a table or an object. For example, a remote computing device requesting the query may in response receive the results of the query. The results of the query may be in various formats (e.g., CSV or data for reconstructing a display of the output table).

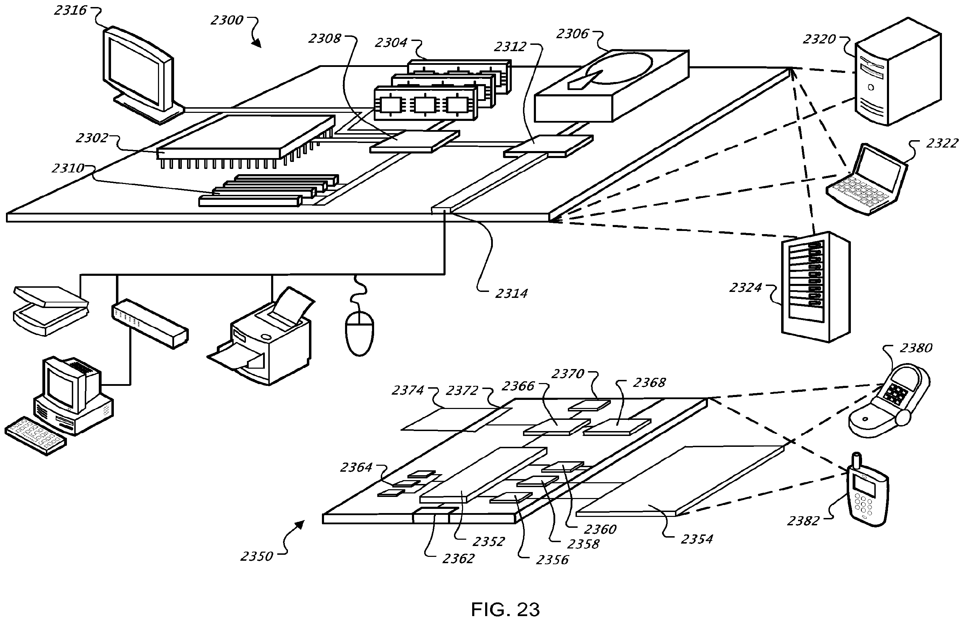

Figure 23 is a block diagram of computing devices 2300, 2350 that may be used to implement the systems and methods described in this document, as either a client or as a server or plurality of servers. Computing device 2300 is intended to represent various forms of digital computers, such as laptops, desktops, workstations, personal digital assistants, servers, blade servers, mainframes, and other appropriate computers. Computing device 2350 is intended to represent various forms of mobile devices, such as personal digital assistants, cellular telephones, smartphones, and other similar computing devices. Additionally computing device 2300 or 2350 can include Universal Serial Bus (USB) flash drives. The USB flash drives may store operating systems and other applications. The USB flash drives can include input/output components, such as a wireless transmitter or USB connector that may be inserted into a USB port of another computing device. The components shown here, their connections and relationships, and their functions, are meant to be exemplary only, and are not meant to limit implementations described and/or claimed in this document.

Computing device 2300 includes a processor 2302, memory 2304, a storage device 2306, a high-speed interface 2308 connecting to memory 2304 and high-speed expansion ports 2310, and a low speed interface 2312 connecting to low speed bus 2314 and storage device 2306. Each of the components 2302, 2304, 2306, 2308, 2310, and 2312, are interconnected using various busses, and may be mounted on a common motherboard or in other manners as appropriate. The processor 2302 can process instructions for execution within the computing device 2300, including instructions stored in the memory 2304 or on the storage device 2306 to display graphical information for a GUI on an external input/output device, such as display 2316 coupled to high speed interface 2308. In other implementations, multiple processors and/or multiple buses may be used, as appropriate, along with multiple memories and types of memory. Also, multiple computing devices 2300 may be connected, with each device providing portions of the necessary operations (e.g., as a server bank, a group of blade servers, or a multi-processor system).

The memory 2304 stores information within the computing device 2300. In one implementation, the memory 2304 is a volatile memory unit or units. In another implementation, the memory 2304 is a non-volatile memory unit or units. The memory 2304 may also be another form of computer-readable medium, such as a magnetic or optical disk.

The storage device 2306 is capable of providing mass storage for the computing device 2300. In one implementation, the storage device 2306 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 2304, the storage device 2306, or memory on processor 2302.

The high speed controller 2308 manages bandwidth-intensive operations for the computing device 2300, while the low speed controller 2312 manages lower bandwidth-intensive operations. Such allocation of functions is exemplary only. In one implementation, the high-speed controller 2308 is coupled to memory 2304, display 2316 (e.g., through a graphics processor or accelerator), and to high-speed expansion ports 2310, which may accept various expansion cards (not shown). In the implementation, low-speed controller 2312 is coupled to storage device 2306 and low-speed expansion port 2314. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 2300 may be implemented in a number of different forms, as shown in the figure. For example, it may be implemented as a standard server 2320, or multiple times in a group of such servers. It may also be implemented as part of a rack server system 2324. In addition, it may be implemented in a personal computer such as a laptop computer 2322. Alternatively, components from computing device 2300 may be combined with other components in a mobile device (not shown), such as device 2350. Each of such devices may contain one or more of computing device 2300, 2350, and an entire system may be made up of multiple computing devices 2300, 2350 communicating with each other.

Computing device 2350 includes a processor 2352, memory 2364, an input/output device such as a display 2354, a communication interface 2366, and a transceiver 2368, among other components. The device 2350 may also be provided with a storage device, such as a microdrive or other device, to provide additional storage. Each of the components 2350, 2352, 2364, 2354, 2366, and 2368, are interconnected using various buses, and several of the components may be mounted on a common motherboard or in other manners as appropriate.

The processor 2352 can execute instructions within the computing device 2350, including instructions stored in the memory 2364. The processor may be implemented as a chipset of chips that include separate and multiple analog and digital processors. Additionally, the processor may be implemented using any of a number of architectures. For example, the processor 410 may be a CISC (Complex Instruction Set Computers) processor, a RISC (Reduced Instruction Set Computer) processor, or a MISC (Minimal Instruction Set Computer) processor. The processor may provide, for example, for coordination of the other components of the device 2350, such as control of user interfaces, applications run by device 2350, and wireless communication by device 2350.

Processor 2352 may communicate with a user through control interface 2358 and display interface 2356 coupled to a display 2354. The display 2354 may be, for example, a TFT (Thin-Film-Transistor Liquid Crystal Display) display or an OLED (Organic Light Emitting Diode) display, or other appropriate display technology. The display interface 2356 may comprise appropriate circuitry for driving the display 2354 to present graphical and other information to a user. The control interface 2358 may receive commands from a user and convert them for submission to the processor 2352. In addition, an external interface 2362 may be provide in communication with processor 2352, so as to enable near area communication of device 2350 with other devices. External interface 2362 may provide, for example, for wired communication in some implementations, or for wireless communication in other implementations, and multiple interfaces may also be used.

The memory 2364 stores information within the computing device 2350. The memory 2364 can be implemented as one or more of a computer-readable medium or media, a volatile memory unit or units, or a non-volatile memory unit or units. Expansion memory 2374 may also be provided and connected to device 2350 through expansion interface 2372, which may include, for example, a SIMM (Single In Line Memory Module) card interface. Such expansion memory 2374 may provide extra storage space for device 2350, or may also store applications or other information for device 2350. Specifically, expansion memory 2374 may include instructions to carry out or supplement the processes described above, and may include secure information also. Thus, for example, expansion memory 2374 may be provide as a security module for device 2350, and may be programmed with instructions that permit secure use of device 2350. In addition, secure applications may be provided via the SIMM cards, along with additional information, such as placing identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 2364, expansion memory 2374, or memory on processor 2352 that may be received, for example, over transceiver 2368 or external interface 2362..

Device 2350 may communicate wirelessly through communication interface 2366, which may include digital signal processing circuitry where necessary. Communication interface 2366 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 2368. In addition, short-range communication may occur, such as using a Bluetooth, WiFi, or other such transceiver (not shown). In addition, GPS (Global Positioning System) receiver module 2370 may provide additional navigation- and location-related wireless data to device 2350, which may be used as appropriate by applications running on device 2350.

Device 2350 may also communicate audibly using audio codec 2360, which may receive spoken information from a user and convert it to usable digital information. Audio codec 2360 may likewise generate audible sound for a user, such as through a speaker, e.g., in a handset of device 2350. Such sound may include sound from voice telephone calls, may include recorded sound (e.g., voice messages, music files, etc.) and may also include sound generated by applications operating on device 2350.

The computing device 2350 may be implemented in a number of different forms, as shown in the figure. For example, it may be implemented as a cellular telephone 2380. It may also be implemented as part of a smartphone 2382, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), peer-to-peer networks (having ad-hoc or static members), grid computing infrastructures, and the Internet.

The computing system can include clients and servers. A client and server are generally remote from each other and typically interact through a communication network. The relationship of client and server arises by virtue of computer programs running on the respective computers and having a client-server relationship to each other.

Although a few implementations have been described in detail above, other modifications are possible within the scope of the pending claims. For example, other mechanisms for generating and processing columnar storage representations of nested records may be used. In addition, the logic flows depicted in the figures do not require the particular order shown, or sequential order, to achieve desirable results. Other

steps may be provided, or steps may be eliminated, from the described flows, and other components may be added to, or removed from, the described systems.

**Claims**

1.   A computer-implemented method, the method comprising:

receiving (2202), at a server system and from a remote computing device, a request to store data at the server system, wherein the data includes a collection of nested structured records, wherein each one of the nested structured records is created in accordance with a schema identifying fields for the respective record, wherein the fields defined in the schema form a tree hierarchy, wherein some fields are children of other fields, wherein, except for fields that are at a highest level and are not children of any other fields, each field has a parent field, wherein a field of a respective record is defined as repeatable if it may occur multiple times in the respective record, wherein a field of a respective record is defined as optional if it may be missed in the respective record, and wherein each field is identifiable in a respective record by a corresponding field path, which includes a listing of the respective field and its parent fields in the respective record;

storing (2204), by the server system, the data identified in the request as an object in a repository at the server system;

receiving (2206), at the server system and from a remote computing device, a request to create a table, wherein the request identifies a name for the table;

creating (2208), by the server system and at the server system, the table with the name identified in the request;

receiving (2210), at the server system, a request to import the data in the object into the table;

importing (2212, 2214), by the server system, the data in the object into the table, wherein importing the data in the object into the table includes:

(i) converting (2212) the collection of the nested structured records of the data in the object into columnar stripes, wherein each columnar stripe includes values for a corresponding field of the structured records, wherein, for each value, a corresponding repetition value and a corresponding definition value are stored, and wherein the converting comprises traversing the tree hierarchy of the fields for each one of the structured records and executing the following for each one of the structured records:

determining for a currently considered field in the tree hierarchy whether or not the currently considered field has been seen in the record;
if the currently considered field has not been seen in the record, adding the currently considered field to a seen fields set of the record;
if the currently considered field has been seen in the record, setting the repetition value to a level in the tree hierarchy, which the currently considered field has in the tree hierarchy; and
if the currently considered field is an atomic field having a corresponding field value, writing in the corresponding columnar stripe the corresponding field value, the repetition value, and the definition value, wherein the definition value is a number of fields in the path of the currently considered field in the tree hierarchy that are optional fields but are present in the path of the currently considered field in the record; and

(ii) storing (2214) the columnar stripes in association with the table;

receiving (2216), at the server system and from a remote computing device, a request to perform a query on the table, wherein the request includes the query and identifies the table; and
performing the query on the table, wherein performing the query includes querying (2220) one or more of the columnar stripes.

2. The computer-implemented method of claim 1:

wherein the repository includes a collection of buckets and the request to store the data identifies a bucket from the collection, each bucket having a name that is unique among buckets in the repository, and each bucket providing a namespace to objects that are stored in each bucket; and
wherein storing the data includes storing the object in the bucket identified in the request to store the data, wherein a bucket in the collection provides multiple different remote computing devices that correspond to different authenticated user accounts an ability to upload data from the different remote computing devices to the bucket.

3. The computer-implemented method of claim 2, wherein the repository stores buckets in a flat namespace such that buckets are not nested.

4. The computer-implemented method of any one of claims 1-3, wherein the request to store data, the request to create the table, and the request to perform the query are received at the server system through application programming interfaces and from one or more remote computing devices that submit the requests over the internet.

5. The computer-implemented method of any one of claims 1-4:

further comprising receiving, at the server system and from a remote computing device, a request to establish a continuous import service, the request identifying a bucket to monitor for newly stored objects and a table in which data in the newly stored objects is to be imported; and
wherein the request to import the data in the object into the table is received from the continuous import service operating at the server system in response to the continuous import service determining that the object is newly stored in the bucket,
further comprising deleting the object from the repository in response to importing the data in the object into the table.

6. The computer-implemented method of claim 1, wherein a particular one of the structured records includes multiple values for a particular field, and wherein the multiple values for the particular field are stored in a particular columnar stripe.

7. The computer-implemented method of claim 6, wherein the particular record includes multiple values for another field, and wherein the multiple values for the other field are stored in a different columnar stripe; wherein the particular columnar stripe stores, in an adjacent relationship, values for the particular field from multiple of the records.

8. The computer-implemented method of claim 6, wherein the particular record includes multiple values for another field, and wherein the multiple values for the other field are stored in a different columnar stripe, wherein the particular record includes nested sets of values for fields.

9. The computer-implemented method of claim 1, wherein the schema specifies a structure of the structured records in the collection; further comprising:

receiving, at the server system and from a remote computing device, a request to extend the schema to include a new field; and
generating, by the server system, a new columnar stripe for the new field without modifying the columnar stripes.

10. The computer-implemented method of claim 1, wherein the schema specifies a structure of the structured records in the collection; further comprising:

receiving, at the server system and from a remote computing device, a request to change an existing name of a field in the schema to a new name of the field; and
designating, by the server system, the new name as an alias of the existing name so that data identified with a field of the existing name and data identified with a field of the new name are stored in a same columnar stripe.

11. The computer-implemented method of claim any one of claims 1-10,
wherein creating the table includes generating, in the repository, a delegate object having the name of the table,
wherein creating the table includes generating in a database metadata for the table, the delegate object references the metadata for the table so that the metadata is accessed when the server system performs an operation on the delegate object.

12. The computer-implemented method of any one of claims 1-11, wherein the table is a structured data set that is configured to be queried by the server system.

13. A computer-implemented method, the method comprising:

transmitting (2202), by a computing device and to a remote server system, a request to store data at the server system such that, in response to receiving the request, the server system stores the data identified in the request as an object in a repository at the server system, wherein the data includes a collection of nested structured records, wherein each one of the nested structured records is created in accordance with a schema identifying fields for the respective record, wherein the fields defined in the schema form a tree hierarchy, wherein some fields are children of other fields, wherein, except for fields that are at a highest level and are not children of any other fields, each field has a parent field, and wherein a field of a respective record is defined as repeatable if it may occur multiple times in the respective record, wherein a field of a respective record is defined as optional if it may be missed in the respective record, and wherein each field is identifiable in a respective record by a corresponding field path, which includes a listing of the respective field and its parent fields in the respective record;
transmitting (2206), by the computing device and to the server system, a request to create a table, the request identifying a name for the table, such that, in response to receiving the request, the server system creates the table with the name identified in the request;
transmitting (2210), by the computing device and to the server system, a request to import the data in the object into the table such that, in response to receiving the request, the server system imports the data in the object into the table, wherein importing the data in the object into the table includes:

(i) converting (2212) the collection of the nested structured records of the data in the object into columnar stripes, wherein each columnar stripe includes values for a corresponding field of the structured records, wherein, for each value, a corresponding repetition value and a corresponding definition value are stored, and wherein the converting comprises traversing the tree hierarchy of the fields for each one of the structured records and executing the following for each one of the structured records:

determining for a currently considered field in the tree hierarchy whether or not the currently considered field has been seen in the record;

if the currently considered field has not been seen in the record, adding the currently considered field to a seen fields set of the record;

if the currently considered field has been seen in the record, setting the repetition value to a level in the tree hierarchy, which the currently considered field has in the tree hierarchy; and

if the currently considered field is an atomic field having a corresponding field value, writing in the corresponding columnar stripe the corresponding field value, the repetition value, and the definition value, wherein the definition value is a number of fields in the path of the currently considered field in the tree hierarchy that are optional fields but are present in the path of the currently considered field in the record; and

(ii) storing (2214) the columnar stripes in association with the table; and

transmitting, by the computing device and to the server system, a request to perform a query on the table, the request including the query and identifying the table, such that, in response to receiving the request, the server system performs the query on the table, wherein performing the query includes querying (2220) one or more of the columnar stripes.

14. A system, the system comprising:

an object storage repository, at a server system, configured to store (2204), as an object, data that is transmitted from a remote computing device, wherein the data includes a collection of nested structured records, wherein each one of the nested structured records is created in accordance with a schema identifying fields for the respective record, wherein the fields defined in the schema form a tree hierarchy, wherein some fields are children of other fields, wherein, except for fields that are at a highest level and are not children of any other fields, each field has a parent field, and wherein a field of a respective record is defined as repeatable if it may occur multiple times in the respective record, wherein a field of a respective record is defined as optional if it may be missed in the respective record, and wherein each field is identifiable in a respective record by a corresponding field path, which includes a listing of the respective field and its parent fields in the respective record;

a table management system, at the server system, configured to, in response to a request from a remote computing device to create a table, create (2208) the table;

an import job manager at the server system configured to, in response to a request from a remote computing device to import the data in the object into the table, import (2212, 2214) the data in the object into the table, wherein importing the data in the object into the table includes:

(i) converting (2212) the collection of the nested structured records of the data in the object into columnar stripes, wherein each columnar stripe includes values for a corresponding field of the structured records, wherein, for each value, a corresponding repetition value and a corresponding definition value are stored, and wherein the converting comprises traversing the tree hierarchy of the fields for each one of the structured records and executing the following for each one of the structured records:

determining for a currently considered field in the tree hierarchy whether or not the currently considered field has been seen in the record;

if the currently considered field has not been seen in the record, adding the currently considered field to a seen fields set of the record;

if the currently considered field has been seen in the record, setting the repetition value to a level in the tree hierarchy, which the currently considered field has in the tree hierarchy; and

if the currently considered field is an atomic field having a corresponding field value, writing in the corresponding columnar stripe the corresponding field value, the repetition value, and a definition value, wherein the definition value is a number of fields in the path of the currently considered field in the tree hierarchy that are optional fields but are present in the path of the currently considered field in the record; and

(ii) storing (2214) the columnar stripes in association with the table; and

a columnar data processing system at the server system configured to, in response to a request, from a remote computing device to perform a query, perform the query on the table, wherein performing the query includes querying (2220) one or more of the columnar stripes.

**Patentansprüche**

1.  Computerimplementiertes Verfahren, wobei das Verfahren umfasst:

    Empfangen (2202), an einem Serversystem und von einer entfernten Rechenvorrichtung, einer Anforderung, Daten in dem Serversystem zu speichern, wobei die Daten eine Sammlung von verschachtelten strukturierten Datensätzen beinhalten, wobei jeder der verschachtelten strukturierten Datensätze gemäß einem Schema erstellt wird, das Felder für den jeweiligen Datensatz identifiziert, wobei die im Schema definierten Felder eine Baumhierarchie bilden, wobei einige Felder Kinder anderer Felder sind, wobei, mit Ausnahme von Feldern, die auf einer höchsten Ebene sind und keine Kinder anderer Felder sind, jedes Feld ein übergeordnetes Feld aufweist, wobei ein Feld eines jeweiligen Datensatzes als wiederholbar definiert ist, wenn es mehrfach in dem jeweiligen Datensatz auftreten kann, wobei ein Feld eines jeweiligen Datensatzes als optional definiert ist, wenn es in dem jeweiligen Datensatz übersehen werden kann, und wobei jedes Feld in einem jeweiligen Datensatz durch einen entsprechenden Feldpfad identifizierbar ist, der eine Auflistung des jeweiligen Feldes und seiner übergeordneten Felder in dem jeweiligen Datensatz beinhaltet;
    Speichern (2204), durch das Serversystem, der in der Anforderung identifizierten Daten als Objekt in einem Repository auf dem Serversystem;
    Empfangen (2206), an dem Serversystem und von einer entfernten Rechenvorrichtung, einer Anforderung zum Erstellen einer Tabelle, wobei die Anforderung einen Namen für die Tabelle identifiziert;
    Erstellen (2208), durch das Serversystem und auf dem Serversystem, der Tabelle mit dem in der Anforderung identifizierten Namen;
    Empfangen (2210), an dem Serversystem, einer Anforderung, die Daten in dem Objekt in die Tabelle zu importieren;
    Importieren (2212, 2214), durch das Serversystem, der Daten in dem Objekt in die Tabelle, wobei das Importieren der Daten in dem Objekt in die Tabelle beinhaltet:

    (i) Umwandeln (2212) der Sammlung der verschachtelten strukturierten Datensätze der Daten in dem Objekt in spaltenförmige Streifen, wobei jeder spaltenförmige Streifen Werte für ein entsprechendes Feld der strukturierten Datensätze enthält, wobei für jeden Wert ein entsprechender Wiederholungswert und ein entsprechender Definitionswert gespeichert werden, und wobei die Umwandlung einen Durchlauf durch die Baumhierarchie der Felder für jeden der strukturierten Datensätze und eine Durchführung des folgenden für jeden der strukturierten Datensätze umfasst:

    Bestimmen für ein aktuell betrachtetes Feld in der Baumhierarchie, ob das aktuell betrachtete Feld in dem Datensatz gesehen wurde oder nicht;
    wenn das aktuell betrachtete Feld nicht in dem Datensatz gesehen wurde, Hinzufügen des aktuell betrachteten Felds zu einem Satz von gesehenen Feldern des Datensatzes;
    wenn das aktuell betrachtete Feld in dem Datensatz gesehen wurde, Einstellen des Wiederholungswerts auf eine Ebene in der Baumhierarchie, die das aktuell betrachtete Feld in der Baumhierarchie hat; und
    wenn das aktuell betrachtete Feld ein Atomfeld mit einem entsprechenden Feldwert ist, Schreiben in den entsprechenden Spaltenstreifen den entsprechenden Feldwert, den Wiederholungswert und den Definitionswert, wobei der Definitionswert eine Anzahl von Feldern in dem Pfad des aktuell betrachteten Feldes in der Baumhierarchie ist, die optionale Felder sind, aber in dem Pfad des aktuell betrachteten Feldes in der Aufzeichnung vorhanden sind; und

    (ii) Speichern (2214) der spaltenförmigen Streifen in Assoziation mit der Tabelle;

    Empfangen (2216), an dem Serversystem und von einer entfernten Rechenvorrichtung, einer Anforderung zum Ausführen einer Abfrage an der Tabelle, wobei die Anforderung die Abfrage beinhaltet und die Tabelle identifiziert; und
    Durchführen der Abfrage auf der Tabelle, wobei das Durchführen der Abfrage ein Abfragen (2220) eines oder mehrerer der spaltenförmigen Streifen beinhaltet.

2.  Computerimplementiertes Verfahren gemäß Anspruch 1:

wobei das Repository eine Sammlung von Behältern beinhaltet und die Anforderung, die Daten zu speichern, einen Behälter aus der Sammlung identifiziert, wobei jeder Behälter einen Namen hat, der unter den Behältern im Repository eindeutig ist, und jeder Behälter einen Namensraum für Objekte bereitstellt, die in jedem Behälter gespeichert sind; und

wobei das Speichern der Daten ein Speichern des Objekts in dem in der Anforderung zum Speichern der Daten identifizierten Behälter beinhaltet, wobei ein Behälter in der Sammlung mehreren verschiedenen entfernten Rechenvorrichtungen, die verschiedenen authentifizierten Benutzerkonten entsprechen, die Möglichkeit bietet, Daten von den verschiedenen entfernten Rechenvorrichtungen in den Behälter zu laden.

3. Computerimplementiertes Verfahren gemäß Anspruch 2, wobei das Repository Behälter in einem flachen Namensraum speichert, so dass Behälter nicht verschachtelt sind.

4. Computerimplementiertes Verfahren gemäß einem der Ansprüche 1-3, wobei die Anforderung, Daten zu speichern, die Anforderung, die Tabelle zu erstellen, und die Anforderung, die Abfrage durchzuführen, an dem Serversystem über Anwendungs-Programmierschnittstellen und von einer oder mehreren entfernten Rechenvorrichtungen empfangen werden, die die Anfragen über das Internet übermitteln.

5. Computerimplementiertes Verfahren gemäß einem der Ansprüche 1-4:

ferner umfassend das Empfangen, an dem Serversystem und von einer entfernten Rechenvorrichtung, einer Anforderung zum Aufbau eines kontinuierlichen Importdienstes, wobei die Anforderung einen Behälter zum Überwachen auf neu gespeicherte Objekte und eine Tabelle, in der Daten in den neu gespeicherten Objekten importiert werden sollen, identifiziert; und

wobei die Anforderung, die Daten in dem Objekt in die Tabelle zu importieren, von dem kontinuierlichen Importdienst empfangen wird, der an dem Serversystem als Antwort auf den kontinuierlichen Importdienst arbeitet, der bestimmt, dass das Objekt neu in dem Behälter gespeichert wird,

ferner umfassend ein Löschen des Objekts aus dem Repository als Antwort auf das Importieren der Daten in dem Objekt in die Tabelle.

6. Computerimplementiertes Verfahren gemäß Anspruch 1, wobei ein bestimmter der strukturierten Datensätze mehrere Werte für ein bestimmtes Feld beinhaltet, und wobei die mehreren Werte für das bestimmte Feld in einem bestimmten spaltenförmigen Streifen gespeichert sind.

7. Computerimplementiertes Verfahren gemäß Anspruch 6, wobei der bestimmte Datensatz mehrere Werte für ein anderes Feld beinhaltet und wobei die mehreren Werte für das andere Feld in einem anderen spaltenförmigen Streifen gespeichert sind; wobei der bestimmte spaltenförmige Streifen in einer benachbarten Beziehung Werte für das bestimmte Feld aus mehreren der Datensätze speichert.

8. Computerimplementiertes Verfahren gemäß Anspruch 6, wobei der bestimmte Datensatz mehrere Werte für ein anderes Feld beinhaltet und wobei die mehreren Werte für das andere Feld in einem anderen spaltenförmigen Streifen gespeichert sind, wobei der bestimmte Datensatz verschachtelte Sätze von Werten für Felder beinhaltet.

9. Computerimplementiertes Verfahren gemäß Anspruch 1, wobei das Schema eine Struktur der strukturierten Datensätze in der Sammlung angibt; ferner umfassend:

Empfangen, an dem Serversystem und von einer entfernten Rechenvorrichtung, einer Anforderung, das Schema zu erweitern, um ein neues Feld hinzuzufügen; und

Erzeugen, durch das Serversystem, eines neuen spaltenförmigen Streifens für das neue Feld, ohne die spaltenförmigen Streifen zu ändern.

10. Computerimplementiertes Verfahren gemäß Anspruch 1, wobei das Schema eine Struktur der strukturierten Datensätze in der Sammlung angibt; ferner umfassend:

Empfangen, an dem Serversystem und von einer entfernten Rechenvorrichtung, einer Anforderung, einen bestehenden Namen eines Feldes in dem Schema in einen neuen Namen des Feldes zu ändern; und

Benennen, durch das Serversystem, des neuen Namens als ein Alias des bestehenden Namens, so dass Daten, die mit einem Feld des bestehenden Namens identifiziert wurden, und Daten, die mit einem Feld des neuen Namens identifiziert wurden, in einem gleichen spaltenförmigen Streifen gespeichert werden.

**11.** Computerimplementiertes Verfahren gemäß einem der Ansprüche 1-10,
wobei das Erstellen der Tabelle ein Erzeugen, in dem Repository, eines Delegatenobjekts mit dem Namen der Tabelle beinhaltet,
wobei das Erstellen der Tabelle ein Erzeugen von Metadaten für die Tabelle in einer Datenbank beinhaltet, wobei das Delegatenobjekt die Metadaten für die Tabelle referenziert, so dass auf die Metadaten zugegriffen wird, wenn das Serversystem eine Operation auf dem Delegatenobjekt durchführt.

**12.** Computerimplementiertes Verfahren gemäß einem der Ansprüche 1-11, wobei die Tabelle ein strukturierter Datensatz ist, der konfiguriert ist, um von dem Serversystem abgefragt zu werden.

**13.** Computerimplementiertes Verfahren, wobei das Verfahren umfasst:

Übertragen (2202), durch eine Rechenvorrichtung und an ein entferntes Serversystem, einer Anforderung, Daten in dem Serversystem so zu speichern, dass das Serversystem als Antwort auf das Empfangen der Anforderung die in der Anforderung identifizierten Daten als Objekt in einem Repository auf dem Serversystem speichert, wobei die Daten eine Sammlung von verschachtelten strukturierten Datensätzen beinhalten, wobei jeder der verschachtelten strukturierten Datensätze gemäß einem Schema erstellt wird, das Felder identifiziert, die für den jeweiligen Datensatz identifizieren, wobei die in dem Schema definierten Felder eine Baumhierarchie bilden, wobei einige Felder Kinder von anderen Feldern sind, wobei, mit Ausnahme von Feldern, die auf höchster Ebene liegen und keine Kinder anderer Felder sind, jedes Feld ein übergeordnetes Feld aufweist, und wobei ein Feld eines jeweiligen Datensatzes als wiederholbar definiert ist, wenn es mehrfach in dem jeweiligen Datensatz auftreten kann, wobei ein Feld eines jeweiligen Datensatzes als optional definiert ist, wenn es in dem jeweiligen Datensatz übersehen werden kann, und wobei jedes Feld in einem jeweiligen Datensatz durch einen entsprechenden Feldpfad identifizierbar ist, der eine Auflistung des jeweiligen Feldes und seiner übergeordneten Felder in dem jeweiligen Datensatz beinhaltet;
Übertragen (2206), durch die Rechenvorrichtung und an das Serversystem, einer Anforderung zum Erstellen einer Tabelle, wobei die Anforderung einen Namen für die Tabelle identifiziert, so dass das Serversystem als Antwort auf das Empfangen der Anforderung die Tabelle mit dem in der Anforderung identifizierten Namen erstellt;
Übertragen (2210), durch die Rechenvorrichtung und an das Serversystem, einer Anforderung zum Importieren der Daten in dem Objekt in die Tabelle, so dass das Serversystem als Antwort auf das Empfangen der Anforderung die Daten in dem Objekt in die Tabelle importiert, wobei das Importieren der Daten in dem Objekt in die Tabelle beinhaltet:

(i) Umwandeln (2212) der Sammlung der verschachtelten strukturierten Datensätze der Daten in dem Objekt in spaltenförmige Streifen, wobei jeder spaltenförmige Streifen Werte für ein entsprechendes Feld der strukturierten Datensätze enthält, wobei für jeden Wert ein entsprechender Wiederholungswert und ein entsprechender Definitionswert gespeichert werden, und wobei die Umwandlung ein Durchlaufen der Baumhierarchie der Felder für jeden der strukturierten Datensätze und ein Ausführen des folgenden für jeden der strukturierten Datensätze umfasst:

Bestimmen für ein aktuell betrachtetes Feld in der Baumhierarchie, ob das aktuell betrachtete Feld in dem Datensatz gesehen wurde oder nicht;
wenn das aktuell betrachtete Feld nicht im Datensatz gesehen wurde, Hinzufügen des aktuell betrachteten Felds zu einem Satz von gesehenen Feldern des Datensatzes;
wenn das aktuell betrachtete Feld im Datensatz gesehen wurde, Einstellen des Wiederholungswerts auf eine Ebene in der Baumhierarchie, die das aktuell betrachtete Feld in der Baumhierarchie hat; und
wenn das aktuell betrachtete Feld ein Atomfeld mit einem entsprechenden Feldwert ist, Schreiben in den entsprechenden spaltenförmigen Streifen den entsprechenden Feldwert, den Wiederholungswert und den Definitionswert, wobei der Definitionswert eine Anzahl von Feldern in dem Pfad des aktuell betrachteten Feldes in der Baumhierarchie ist, die optionale Felder sind, aber in dem Pfad des aktuell betrachteten Feldes in der Aufzeichnung vorhanden sind; und

(ii) Speichern (2214) der spaltenförmigen Streifen in Assoziation mit der Tabelle; und

Übertragen, durch die Rechenvorrichtung und an das Serversystem, einer Anforderung, eine Abfrage an der Tabelle durchzuführen, wobei die Anforderung die Abfrage beinhaltet und die Tabelle identifiziert, so dass das Serversystem als Antwort auf das Empfangen der Anforderung die Abfrage an der Tabelle durchführt, wobei das Ausführen der Abfrage ein Abfragen (2220) eines oder mehrerer der spaltenförmigen Streifen beinhaltet.

14. System, wobei das System umfasst:

ein Objektspeicher-Repository an einem Serversystem, das konfiguriert ist, um Daten, die von einer entfernten Rechenvorrichtung übertragen werden, als Objekt zu speichern (2204), wobei die Daten eine Sammlung von verschachtelten strukturierten Datensätzen beinhalten, wobei jeder der verschachtelten strukturierten Datensätze gemäß einem Schema erstellt wird, das Felder für den jeweiligen Datensatz identifiziert, wobei die im Schema definierten Felder eine Baumhierarchie bilden, wobei einige Felder Kinder anderer Felder sind, wobei, mit Ausnahme von Feldern, die auf höchster Ebene liegen und keine Kinder anderer Felder sind, hat jedes Feld ein übergeordnetes Feld, und wobei ein Feld eines jeweiligen Datensatzes als wiederholbar definiert ist, wenn es mehrfach in dem jeweiligen Datensatz auftreten kann, wobei ein Feld eines jeweiligen Datensatzes als optional definiert ist, wenn es in dem jeweiligen Datensatz übersehen werden kann, und wobei jedes Feld in einem jeweiligen Datensatz durch einen entsprechenden Feldpfad identifizierbar ist, der eine Auflistung des jeweiligen Feldes und seiner übergeordneten Felder in dem jeweiligen Datensatz beinhaltet;

ein Tabellenmanagementsystem auf dem Serversystem, das konfiguriert ist, um als Antwort auf eine Anforderung einer entfernten Rechenvorrichtung, eine Tabelle zu erstellen, die Tabelle zu erstellen (2208);

einen Importauftragsmanager auf dem Serversystem, der konfiguriert ist, um als Antwort auf eine Anforderung einer entfernten Rechenvorrichtung, die Daten in dem Objekt in die Tabelle zu importieren, die Daten in dem Objekt in die Tabelle zu importieren (2212, 2214), wobei das Importieren der Daten in dem Objekt in die Tabelle beinhaltet:

(i) Umwandeln (2212) der Sammlung der verschachtelten strukturierten Datensätze der Daten in dem Objekt in spaltenförmige Streifen, wobei jeder spaltenförmige Streifen Werte für ein entsprechendes Feld der strukturierten Datensätze enthält, wobei für jeden Wert ein entsprechender Wiederholungswert und ein entsprechender Definitionswert gespeichert werden, und wobei die Umwandlung ein Durchlaufen der Baumhierarchie der Felder für jeden der strukturierten Datensätze und ein Ausführen des folgenden für jeden der strukturierten Datensätze umfasst:

Bestimmen für ein aktuell betrachtetes Feld in der Baumhierarchie, ob das aktuell betrachtete Feld in dem Datensatz gesehen wurde oder nicht;
wenn das aktuell betrachtete Feld nicht in dem Datensatz gesehen wurde, hinzufügen des aktuell betrachteten Felds zu einer Menge der gesehenen Felder des Datensatzes;
wenn das aktuell betrachtete Feld in dem Datensatz gesehen wurde, Einstellen des Wiederholungswerts auf eine Ebene in der Baumhierarchie, die das aktuell betrachtete Feld in der Baumhierarchie hat; und
wenn das aktuell betrachtete Feld ein Atomfeld mit einem entsprechenden Feldwert ist, Schreiben in den entsprechenden Spaltenstreifen den entsprechenden Feldwert, den Wiederholungswert und einen Definitionswert, wobei der Definitionswert eine Anzahl von Feldern im Pfad des aktuell betrachteten Feldes in der Baumhierarchie ist, die optionale Felder sind, aber im Pfad des aktuell betrachteten Feldes in der Aufzeichnung vorhanden sind; und

(ii) Speichern (2214) der spaltenförmigen Streifen in Assoziation mit der Tabelle; und

ein spaltenförmiges Datenverarbeitungssystem an dem Serversystem, das konfiguriert ist, um als Antwort auf eine Anforderung von einer entfernten Rechenvorrichtung, eine Abfrage durchzuführen, die Abfrage an der Tabelle durchzuführen, wobei das Ausführen der Abfrage ein Abfragen (2220) eines oder mehrerer der spaltenförmigen Streifen beinhaltet.

## Revendications

1. Un procédé mis en oeuvre par ordinateur, le procédé comprenant :

le fait (2202) de recevoir, au niveau d'un système serveur et depuis un dispositif informatique distant, une demande de stockage de données au niveau du système serveur, les données comprenant une collection d'enregistrements structurés imbriqués, chacun des enregistrements structurés imbriqués étant créé selon un schéma identifiant des champs pour l'enregistrement respectif, les champs définis dans le schéma formant une arborescence, certains champs étant enfants d'autres champs ; à part pour les champs qui sont à un niveau supérieur et qui ne sont enfants d'aucun autre champ, chaque champ a un champ parent, un champ d'un enregistrement respectif étant défini comme pouvant être répété s'il peut apparaître plusieurs fois dans l'enregistrement respectif, un champ d'un enregistrement respectif étant défini comme étant facultatif s'il peut être omis dans l'enregistrement respectif, et chaque champ étant identifiable dans un enregistrement respectif par un chemin de champ correspondant, qui inclut une liste du champ respectif et de ses champs parents dans l'enregistrement respectif ;

le fait (2204) de stocker, par le système serveur, au niveau du système serveur, les données identifiées dans la requête en tant qu'un objet dans un recueil ;

le fait (2206) de recevoir, au niveau du système serveur et depuis un dispositif informatique distant, une demande de création d'une table, la demande identifiant un nom pour la table ;

le fait (2208) de créer, par le système serveur et au niveau du système serveur, la table avec le nom identifié dans la requête ;

le fait (2210) de recevoir, au niveau du système serveur, une demande d'importation des données de l'objet dans la table ;

le fait (2212, 2214) d'importer, par le système serveur, dans la table, les données présentes dans l'objet, l'importation les données de l'objet dans la table incluant :

(i) le fait (2212) de convertir la collecte des enregistrements structurés imbriqués des données présentes dans l'objet en des bandes en forme de colonnes, chaque bande en forme de colonne comprenant des valeurs pour un champ correspondant des enregistrements structurés, une valeur de répétition correspondante et une valeur de définition correspondante étant stockées pour chaque valeur, et le fait de convertir comprend le fait de parcourir la hiérarchie arborescente des champs pour chacun des enregistrements structurés et le fait d'exécuter les actions suivantes pour chaque enregistrement structuré :

déterminer pour un champ actuellement considéré dans la hiérarchie arborescente si le champ actuellement considéré a été rencontré ou non dans l'enregistrement ;

si le champ actuellement considéré n'a pas été rencontré dans l'enregistrement, ajouter le champ actuellement considéré à un ensemble de champs rencontrés de l'enregistrement ;

si le champ actuellement considéré a été rencontré dans l'enregistrement, fixer la valeur de répétition à un niveau dans la hiérarchie arborescente, qu'a le champ actuellement considéré dans la hiérarchie arborescente ; et

si le champ actuellement considéré est un champ atomique ayant une valeur de champ correspondante, écrire dans la bande en forme de colonne correspondante la valeur de champ correspondante, la valeur de répétition et la valeur de définition, la valeur de définition étant un nombre de champs dans le chemin du champ actuellement considéré dans la hiérarchie arborescente qui sont des champs facultatifs mais qui sont présents dans le chemin du champ actuellement considéré dans l'enregistrement ; et

(ii) le fait (2214) de stocker les bandes en forme de colonnes en association avec la table ;

le fait (2216) de recevoir, au niveau du système serveur et depuis un dispositif informatique distant, une demande pour effectuer une requête dans la table, la demande incluant la requête et identifiant la table ; et

le fait d'exécuter la requête sur la table, le fait d'exécuter la requête comprenant le fait (2220) d'interroger une ou plusieurs des bandes en forme de colonnes.

2. Le procédé mis en oeuvre par ordinateur selon la revendication 1 :

dans lequel le recueil comprend une collection de compartiments et la demande de stockage des données identifie un compartiment parmi la collection, chaque compartiment ayant un nom qui est unique parmi les compartiments du recueil, chaque compartiment fournissant un espace-nom à des objets qui sont stockés dans chaque compartiment ; et

dans lequel le fait de stocker les données comprend le fait de stocker l'objet dans le compartiment identifié dans la demande de stockage des données, un compartiment dans la collection fournissant à plusieurs dispositifs informatiques distants différents qui correspondent à différents comptes utilisateurs authentifiés une capacité de télécharger des données depuis les différents dispositifs informatiques distants vers le compartiment.

3. Le procédé mis en oeuvre par ordinateur selon la revendication 2, dans lequel le recueil stocke des compartiments dans un espace-nom plat de sorte que les compartiments ne sont pas imbriqués.

**4.** Le procédé mis en oeuvre par ordinateur selon l'une quelconque des revendications 1 à 3, dans lequel la demande de stockage des données, la demande de création de la table et la demande d'exécution de la requête sont reçues au niveau du système serveur par l'intermédiaire d'interfaces de programmation d'application et depuis un ou plusieurs dispositifs informatiques distants qui présentent les demandes sur Internet.

**5.** Le procédé mise en oeuvre par ordinateur selon l'une ou l'autre des revendications 1 à 4 :

comprenant en outre le fait de recevoir, au niveau du système serveur et depuis un dispositif informatique distant, une demande d'établissement d'un service d'importation continue, la demande identifiant un compartiment à surveiller pour les objets nouvellement stockés et une table dans laquelle les données présentes dans les objets nouvellement stockés doivent être importés ; et

la demande d'importation dans la table des données présentes dans l'objet étant reçue depuis le service d'importation continue fonctionnant au niveau du système serveur en réponse au fait que le service d'importation continue détermine que l'objet est nouvellement stocké dans le compartiment,

comprenant en outre le fait de supprimer l'objet du recueil en réponse à l'importation dans la table des données présentes dans l'objet.

**6.** Le procédé mis en oeuvre par ordinateur selon la revendication 1, dans lequel un enregistrement particulier parmi les enregistrements structurés comprend des valeurs multiples pour un champ particulier, et dans lequel les valeurs multiples pour le champ particulier sont stockées dans une bande en colonne particulière.

**7.** Le procédé mis en oeuvre par ordinateur selon la revendication 6, dans lequel l'enregistrement particulier comprend des valeurs multiples pour un autre champ, et dans lequel les valeurs multiples pour l'autre champ sont stockées dans une bande en colonne différente ; la bande en colonne particulière stocke, dans une relation adjacente, des valeurs pour le champ particulier provenant de multiples enregistrements.

**8.** Le procédé mis en oeuvre par ordinateur selon la revendication 6, dans lequel l'enregistrement particulier comprend des valeurs multiples pour un autre champ, et dans lequel les valeurs multiples pour l'autre champ sont stockées dans une bande en colonne différente, l'enregistrement particulier comprenant des ensembles de valeurs imbriqués pour des champs.

**9.** Le procédé mise en oeuvre par ordinateur selon la revendication 1, dans lequel le schéma spécifie une structure des enregistrements structurés de la collection ; comprenant en outre :

le fait de recevoir, au niveau du système serveur et depuis un dispositif informatique distant, une demande d'extension du schéma pour inclure un nouveau champ ; et

le fait de générer, par le système serveur, une nouvelle bande en forme de colonne pour le nouveau champ sans modifier les bandes en forme de colonnes.

**10.** Le procédé mis en oeuvre par ordinateur selon la revendication 1, dans lequel le schéma spécifie une structure des enregistrements structurés dans la collection ; comprenant en outre :

le fait de recevoir, au niveau du système serveur et depuis un dispositif informatique distant, une demande de changement d'un nom existant d'un champ du schéma en un nouveau nom du champ ; et

le fait de désigner, par le système serveur, le nouveau nom en tant qu'alias du nom existant de sorte que les données identifiées par un champ du nom existant et les données identifiées par un champ du nouveau nom soient stockées dans une même bande en forme de colonne.

**11.** Le procédé mis en oeuvre par ordinateur selon l'une quelconque des revendications 1 à 10, dans lequel le fait de créer la table comprend le fait de générer, dans le recueil, un objet délégué ayant le nom de la table,

le fait de créer la table comprenant le fait de générer dans une base de données de métadonnées pour la table, l'objet délégué renvoyant aux métadonnées de la table afin que celles-ci soient accessibles lorsque le système serveur effectue une opération sur l'objet délégué.

**12.** Le procédé mis en oeuvre par ordinateur selon l'une quelconque des revendications 1 à 11, dans lequel la table est un ensemble de données structuré qui est configuré pour être interrogé par le système serveur.

**13.** Un procédé mise en oeuvre par ordinateur, le procédé comprenant :

le fait (2202) de transmettre, par un dispositif informatique et vers un système serveur distant, une demande de stockage de données au niveau du système serveur de telle sorte que, en réponse à la réception de la demande, le système serveur stocke les données identifiées dans la demande en tant qu'objet dans un recueil au niveau du système serveur, les données comprenant une collection d'enregistrements structurés imbriqués, chacun des enregistrements structurés imbriqués étant créé selon un schéma identifiant des champs pour l'enregistrement respectif, les champs définis dans le schéma formant une hiérarchie arborescente, certains des champs étant enfants des autres champs, chaque champ, à l'exception des champs qui sont à un niveau le plus élevé et ne sont pas les enfants d'autres champs, ayant un champ parent, et un champ d'un enregistrement respectif étant défini comme pouvant être répété s'il peut apparaître plusieurs fois dans l'enregistrement respectif, un champ d'un enregistrement respectif étant défini comme facultatif s'il peut être omis dans l'enregistrement respectif, et chaque champ étant identifiable dans un enregistrement respectif par un chemin de champ correspondant, qui inclut une liste du champ respectif et ses champs parents dans l'enregistrement respectif ;

le fait (2206) de transmettre, par le dispositif informatique et vers le système serveur, une demande de création d'une table, la demande identifiant un nom pour la table, de sorte que, en réponse à la réception de la demande, le système serveur crée la table avec le nom identifié dans la demande ;

le fait (2210) de transmettre, par le dispositif informatique et vers le système serveur, une demande d'importation dans la table des données présentes dans l'objet de telle sorte que, en réponse à la réception de la demande, le système serveur importe dans la table les données présentes dans l'objet, l'importation dans la table des données présentes dans l'objet comprenant :

(i) le fait (2212) de convertir la collecte des enregistrements structurés imbriqués des données présentes dans l'objet en des bandes en forme de colonnes, chaque bande en forme de colonne comprenant des valeurs pour un champ correspondant des enregistrements structurés ; pour chaque valeur, une valeur de répétition correspondante et une valeur de définition correspondante sont stockées, et le fait de convertir comprend le fait de parcourir la hiérarchie arborescente des champs pour chacun des enregistrements structurés et le fait d'exécuter les actions suivantes pour chaque enregistrement structuré :

déterminer pour un champ actuellement considéré dans la hiérarchie arborescente si le champ actuellement considéré a été rencontré ou non dans l'enregistrement ;

si le champ actuellement considéré n'a pas été rencontré dans l'enregistrement, ajouter le champ actuellement considéré à un ensemble de champs rencontrés de l'enregistrement ;

si le champ actuellement considéré a été rencontré dans l'enregistrement, fixer la valeur de répétition à un niveau dans la hiérarchie arborescente, qu'a le champ actuellement considéré dans la hiérarchie arborescente ; et

si le champ actuellement considéré est un champ atomique ayant une valeur de champ correspondante, écrire dans la bande en forme de colonne correspondante la valeur de champ correspondante, la valeur de répétition et la valeur de définition, la valeur de définition étant un nombre de champs dans le chemin du champ actuellement considéré dans la hiérarchie arborescente qui sont des champs facultatifs mais qui sont présents dans le chemin du champ actuellement considéré dans l'enregistrement ; et

(ii) le fait (2214) de stocker les bandes en forme de colonnes en association avec la table ; et

le fait de transmettre, par le dispositif informatique et vers le système serveur, une demande pour effectuer une requête dans la table, la demande incluant la requête et identifiant la table, de telle sorte que, en réponse à la réception de la requête, le système serveur effectue la requête dans la table, le fait d'effectuer la requête inclut l'interrogation (2220) d'une ou plusieurs des bandes en forme de colonnes.

**14.** Un système, le système comprenant :

un recueil de stockage d'objets, au niveau d'un système serveur, configuré pour stocker (2204), en tant qu'objet, des données qui sont transmises depuis un dispositif informatique distant, les données comprenant une collection d'enregistrements structurés imbriqués, chacun des enregistrements structurés imbriqués étant créé conformément à un schéma identifiant des champs pour l'enregistrement respectif, les champs définis dans le schéma formant une hiérarchie arborescente, certains champs étant les enfants des autres champs, chaque champ, à l'exception des champs qui sont à un niveau le plus élevé et qui ne sont pas des enfants d'autres champs, ayant un champ parent, et un champ d'un enregistrement respectif étant défini comme répétable s'il peut apparaître plusieurs fois dans l'enregistrement respectif, un champ d'un enregistrement respectif étant défini comme facultatif s'il peut être omis dans l'enregistrement respectif, chaque champ étant identifiable dans un enregistrement respectif par un chemin de champ correspondant, qui inclut une liste du champ respectif et de ses champs parents dans l'enregistrement respectif ;

un système de gestion de tables, au niveau du système serveur, configuré pour, en réponse à une demande d'un dispositif informatique distant pour créer une table, créer (2208) la table ;

un gestionnaire de tâches d'importation au niveau du système serveur configuré pour, en réponse à une demande provenant d'un dispositif informatique distant pour importer dans la table les données présentes dans l'objet, importer (2212, 2214) dans la table les données présentes dans l'objet, le fait d'importer dans la table les données présentes dans l'objet comprenant :

(i) le fait (2212) de convertir la collecte des enregistrements structurés imbriqués des données présentes dans l'objet en des bandes en forme de colonnes, chaque bande en forme de colonne comprenant des valeurs pour un champ correspondant des enregistrements structurés, une valeur de répétition correspondante et une valeur de définition correspondante étant stockées, pour chaque valeur, et le fait de convertir comprend le fait de parcourir la hiérarchie arborescente des champs pour chacun des enregistrements structurés et le fait d'exécuter les actions suivantes pour chaque enregistrement structuré :

déterminer pour un champ actuellement considéré dans la hiérarchie arborescente si le champ actuellement considéré a été rencontré ou non dans l'enregistrement ;

si le champ actuellement considéré n'a pas été rencontré dans l'enregistrement, ajouter le champ actuellement considéré à un ensemble de champs rencontrés de l'enregistrement ;

si le champ actuellement considéré a été rencontré dans l'enregistrement, fixer la valeur de répétition à un niveau dans la hiérarchie arborescente, qu'a le champ actuellement considéré dans la hiérarchie arborescente ; et

si le champ actuellement considéré est un champ atomique ayant une valeur de champ correspondante, écrire dans la bande en forme de colonne correspondante la valeur de champ correspondante, la valeur de répétition et une valeur de définition, la valeur de définition étant un nombre de champs dans le chemin du champ actuellement considéré dans la hiérarchie arborescente qui sont des champs facultatifs mais sont présents dans le chemin du champ actuellement considéré dans l'enregistrement ; et

(ii) le fait (2214) de stocker les bandes en forme de colonnes en association avec la table ; et

un système de traitement de données en colonnes au niveau du système serveur configuré pour, en réponse à une demande, provenant d'un dispositif informatique distant pour effectuer une requête, effectuer la requête dans la table, le fait d'effectuer la requête comprenant le fait (2220) d'interroger une ou plusieurs des bandes en forme de colonnes.

record-
oriented

column-
oriented

EP 2 572 289 B1

FIG. 1

```
DocId: 10              r₁
Links
  Forward: 20
  Forward: 40
  Forward: 60
Name
  Language
      Code: 'en-us'
      Country: 'us'
  Language
      Code: 'en'
  Url: 'http://A'
Name
  Url: 'http://B'
Name
  Language
      Code: 'en-gb'
      Country: 'gb'
```

```
message Document {
  required int64 DocID;
  optional group Links {
    repeated int64 Backward;
    repeated int64 Forward; }
  repeated group Name {
    repeated group Language {
      required string Code;
      optional string Country; }
    optional string Url; }}
```

```
DocID: 20              r₂
Links
  Backward: 10
  Backward: 30
  Forward: 80
Name
Url: 'http://c'
```

FIG. 2

**DocId**

| value | r | d |
|---|---|---|
| 10 | 0 | 0 |
| 20 | 0 | 0 |

**Name.Url**

| value | r | d |
|---|---|---|
| http://A | 0 | 2 |
| http://B | 1 | 2 |
| NULL | 1 | 1 |
| http://C | 0 | 2 |

**Links.Forward**

| value | r | d |
|---|---|---|
| 20 | 0 | 2 |
| 40 | 1 | 2 |
| 60 | 1 | 2 |
| 80 | 0 | 2 |

**Links.Backward**

| value | r | d |
|---|---|---|
| NULL | 0 | 1 |
| 10 | 0 | 2 |
| 30 | 1 | 2 |

**Name.Language.Code**

| value | r | d |
|---|---|---|
| en-us | 0 | 2 |
| en | 2 | 2 |
| NULL | 1 | 1 |
| en-gb | 1 | 2 |
| NULL | 0 | 1 |

**Name.Language.Country**

| value | r | d |
|---|---|---|
| us | 0 | 3 |
| NULL | 2 | 2 |
| NULL | 1 | 1 |
| gb | 1 | 3 |
| NULL | 0 | 1 |

FIG. 3

```
 1 procedure  DissectRecord (RecordDecoder decoder,
 2        FieldWriter writer, int repetitionLevel)  :
 3   Add current repetitionLevel  and definition level  to writer
 4 seenFields  =  { }  //  empty set of integers
 5 while  decoder  has more field values
 6  FieldWriter chWriter =
 7      child of  writer  for field read by  decoder
 8  int chRepetitionLevel =  repetitionLevel
 9  if  set seenFields  contains field ID of  chWriter
10      chRepetitionLevel  =  tree depth of  chWriter
11  else
12      Add field ID of  chWriter  to  seenFields
13  end if
14  if  chWriter  corresponds to an atomic field
15      Write value of current field read by  decoder
16      using chWriter  at chRepetitionLevel
17  else
18      DissectRecord  (new RecordDecoder  for nested record
19       read by  decoder, chWriter, chRepetitionLevel)
20  end if
21  end while
22 end procedure
```

FIG. 4

DocId

0

1 Links.Backward → Links.Forward 1

0

0

Name.Language.Code →0, 1, 2 Name.Language.Country

2

1 Name.Url 0, 1

0

FIG. 5

DocId

0

1,2 Name.Language.Country

0

DocID: 10 $S_1$
Name
  Language
    Country: 'us'
  Language
Name
  Language
    Country: 'gb;

DocID: 20 $S_2$
Name

FIG. 6

```
procedure ConstructFSM(Field [] fields) :
  for each field in fields:
    maxLevel = maximal repetition level of field
    barrier = next field after field or final FSM state otherwise
    barrierLevel = common repletion level of field and barrier
    for each preField before field whose
        repetition level is larger than barrierLevel:
      backLevel = common repetition level of preField and field
      Set transition (field, backLevel) -> preField
  end for
  for each level in [barrierLevel+1..maxLevel]
        that lacks transition from field:
    Copy transition's destination from that of level-1
  end for
  for each level in [0..barrierLevel]:
    Set transition (field, level) -> barrier
  end for
 end for
end procedure
```

FIG. 7

```
Record AssembleRecord(FieldReaders[] readers) :
  record = create a new record
  lastReader = select the root field reader in readers
  reader = readers [0]
while reader has data
    Fetch next value from reader
if current value is not NULL
      MoveToLevel (tree level of reader, reader)
      Append reader's value to record
else
      MoveToLevel (full definition level of reader, reader)
end if
    reader = reader that FSM transitions to
      when reading next repetition level from reader
    ReturnToLevel (tree level of reader)
end while
  ReturnToLevel (0)
  End all nested records
return record
end procedure

MoveToLevel (int newLevel, FieldReader nextReader):
    End nested records up to the level of the lowest common ancestor
      of lastReader and nextReader
    Start nested records from the level of the lowest common ancestor
      up to newLevel
    Set lastReader to the one at newLevel
end procedure

ReturnToLevel (int newLevel) {
    End nested records up to newLevel
    Set lastReader to the one at newLevel
end procedure
```

FIG. 8

```
SELECT DocId AS Id,
    COUNT (Name.Language.Code) WRITTEN Name AS Cnt,
    Name.Url + ',' + Name.Language.Code AS Str
FROM t
WHERE REGEXP (Name.Url, '^http') AND DocId <20;
```

```
Id: 10                          t₁
Name
  Cnt: 2
  Language
    Str: 'http://A,en-us'
    Str: 'http://A,en'
Name
  Cnt: 0
```

```
message QueryResult {
  required int64 Id;
  repeated group Name {
    optional unit64 Cnt;
    repeated group Language {
      optional string Str; } } }
```

FIG. 9

FIG. 10

| Table Name | Number of records | Size (unrepl., compressed) | Number of fields | Data center | Repl. factor |
|---|---|---|---|---|---|
| T1 | 85 billion | 87 TB | 270 | A | 3x |
| T2 | 24 billion | 13 TB | 530 | A | 3x |
| T3 | 4 billion | 70 TB | 1200 | A | 3x |
| T4 | 1+ trillion | 105 TB | 50 | B | 3x |
| T5 | 1+ trillion | 20 TB | 30 | B | 2x |

FIG. 11

FIG. 12

## Execution Time (Sec)

FIG. 13

## Execution Time (Sec)

FIG. 14

**Percentage of Processed Tablets**

FIG. 15

**Execution Time (Sec)**

FIG. 16

## Percentage of Processed Tablets

FIG. 17

## Percentage of Queries

FIG. 18

FIG. 19

FIG. 20

FIG. 21

*2200*

*2202*

Receive Request to Store Data

*2204*

Store Data as Object in Repository

*2206*

Receive Request to Create Table

*2208*

Create Table

*2210*

Receive Request to Import Object into Table

*2212*

Convert Object Data into Columnar Format

*2214*

Store Columnar Data

*2216*

Receive Request to Perform Query on Table

*2218*

Determine that Devices are Authenticated

*2220*

Perform Query on Columnar Data

*2222*

Output Data Based on Query

FIG. 22

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2007124317 A1

### Non-patent literature cited in the description

- SW-Store: a vertically partitioned DBMS for Semantic Web data management. **DANIEL J. ABADI et al.** The VLDB Journal; The International Journal on Very Large Data Bases. Springer, vol. 18, 385-406
- **L. A. BARROSO ; U. HOLZLE.** The Datacenter as a Computer: An Introduction to the Design of Warehouse-Scale Machines. Morgan & Claypool Publishers, 2009
- **G. CZAJKOWSKI.** Sorting 1PB with MapReduce. *Official Google Blog,* November 2008, http://googleblog.blogspot.com/2008/11/sorting-1pb-with-mapreduce.html
- **J. DEAN ; S. GHEMAWAT.** MapReduce: Simplified Data Processing on Large Clusters. *OSDI,* 2004
- **J. DEAN.** Challenges in Building Large-Scale Information Retrieval Systems: Invited Talk. *WSDM,* 2009
- **C. OLSTON ; B. REED ; U. SRIVASTAVA ; R. KUMAR ; A. TOMKINS.** Pig Latin: a Not-so-Foreign Language for Data Processing. *SIGMOD,* 2008
- *Hive,* 2009, http://wiki.apache.org/hadoop/Hive
- **D. J. ABADI ; P. A. BONCZ ; S. HARIZOPOULOS.** Column-Oriented Database Systems. *VLDB,* vol. 2 (2), 2009
- **R. PIKE ; S. DORWARD ; R. GRIESEMER ; S. QUINLAN.** Interpreting the Data: Parallel Analysis with Sawzall. *Scientific Programming,* 2005, vol. 13 (4
- **C. CHAMBERS ; A. RANIWALA ; F. PERRY ; S. ADAMS ; R. HENRY ; R. BRADSHAW ; N. WEIZENBAUM ; FLUMEJAVA: EASY.** Efficient Data-Parallel Pipelines. *PLDI,* 2010
- **HAILING YU ; HUA-GANG LI ; PING WU ; DIVYAKANT AGRAWAL ; AMR EL ABBADI.** Efficient processing of distributed top-k queries. *DEXA,* 2005, 65-74